(19) Europäisches Patentamt
European Patent Office
Office européen des brevets

(11) **EP 3 161 085 B1**

(12) **EUROPÄISCHE PATENTSCHRIFT**

(45) Veröffentlichungstag und Bekanntmachung des Hinweises auf die Patenterteilung:
**14.02.2018 Patentblatt 2018/07**

(21) Anmeldenummer: **15738282.1**

(22) Anmeldetag: **23.06.2015**

(51) Int Cl.:
*C09J 4/06* (2006.01)     *C09J 167/00* (2006.01)
*C09D 4/06* (2006.01)     *C08F 290/06* (2006.01)
*C08K 3/34* (2006.01)     *C08K 3/36* (2006.01)

(86) Internationale Anmeldenummer:
**PCT/EP2015/064152**

(87) Internationale Veröffentlichungsnummer:
**WO 2015/197646 (30.12.2015 Gazette 2015/52)**

(54) **UNGESÄTTIGTE POLYESTERHARZ-SYSTEME MIT LATENTER VERDICKUNGSNEIGUNG**

UNSATURATED POLYESTER RESIN SYSTEMS WITH LATENT THICKENING TENDENCY

SYSTÈMES DE RÉSINE DE POLYESTER INSATURÉE AYANT UNE TENDANCE LATENTE À L'ÉPAISSISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2014 EP 14173761**

(43) Veröffentlichungstag der Anmeldung:
**03.05.2017 Patentblatt 2017/18**

(73) Patentinhaber: **BYK-Chemie GmbH**
**46483 Wesel (DE)**

(72) Erfinder:
• **PIESTERT, Frederik**
**46483 Wesel (DE)**
• **PRITSCHINS, Wolfgang**
**46483 Wesel (DE)**
• **KOCKOTH, Sascha**
**46483 Wesel (DE)**
• **OMEIS, Jürgen**
**46483 Wesel (DE)**

(74) Vertreter: **Leifert & Steffan**
**Patentanwälte**
**Postfach 10 40 09**
**40031 Düsseldorf (DE)**

(56) Entgegenhaltungen:
**EP-A2- 0 422 455       WO-A1-2012/175157**
**WO-A1-2012/175159     CA-A- 837 699**
**DE-A1- 10 236 133      GB-A- 1 446 007**
**US-A1- 2012 077 921**

EP 3 161 085 B1

**Beschreibung**

Die vorliegende Erfindung betrifft ungesättigte Polyesterharz Systeme (UP-Systeme), welche unter Verwendung latenter Verdicker erhalten werden. Bei den Systemen handelt es sich um Zwei- oder Mehrkomponentensysteme, insbesondere um Klebstoffe, Dichtstoffe, Beschichtungsmittel oder Formmassen. Der Begriff "ungesättigt" steht auf dem Fachgebiet der ungesättigten Polyester für Stoffe, die Kohlenstoff-Kohlenstoff-Doppelbindungen enthalten.

Insbesondere auf dem Gebiet der Klebstoffe, Dichtstoffe, Beschichtungsmittel und Formmassen ist es notwendig die rheologischen Eigenschaften solcher Systeme maßzuschneidern. Primär erfolgt die Einstellung der Konsistenz durch die Auswahl von Bindemitteln, Lösemitteln und den Gehalt an Pigmenten und/oder Füllstoffen. In vielen Fällen reicht jedoch eine Einstellung der gewünschten Konsistenz mithilfe der vorgenannten Bestandteile nicht aus. In solchen Fällen bedarf es des Zusatzes sogenannter rheologischer Additive. Deren Wirkung kann eine Viskositätssenkung zwecks besserer Verarbeitbarkeit sein oder eine Viskositätserhöhung, die im Rahmen der vorliegenden Erfindung auch als Verdickung bezeichnet wird.

Für die genannten Einsatzzwecke wird eine Vielzahl verschiedener organischer oder anorganischer Verdicker beschrieben.

In wässrigen Systemen werden dabei vornehmlich Celluloseether, Stärke, natürliche Hydrokolloide, synthetische Biopolymere, Polyacrylatverdicker, assoziative Verdickungsmittel auf Basis hydrophob modifizierter Polymere wie Polyether, Etherurethane, Polyacrylamide und alkalisch aktivierter Acrylatemulsionen oder wasserquellbare anorganische Verdicker eingesetzt.

Typische Rheologieadditive für nicht-wässrige Systeme sind neben organischen Verdickern wie Wachsen und thixotropen Harzen, anorganische Verdicker wie beispielsweise Magnesiumoxid und Magnesiumhydroxid, welche vorwiegend in ungesättigten Polyesterharz-Systemen eingesetzt werden, oder amorphe Kieselsäuren und Schichtsilikate.

Allen vorgenannten anorganischen Verdickern ist jedoch gemein, dass sie in den zu verdickenden wässrigen und insbesondere nicht-wässrigen Systemen direkt nach Einarbeitung beziehungsweise Vermischung ihre viskositätserhöhende Wirkung entfalten. Dies ist insbesondere bei Zwei- oder Mehrkomponentensystemen nachteilig.

Unter Zweikomponenten-Systemen werden im engeren Sinn solche Systeme verstanden bei denen eine chemische Reaktion, die zur Härtung führt, durch Mischen von zwei Komponenten, im zur Härtung erforderlichen Verhältnis, eingeleitet wird. Die einzelnen Komponenten sind hierbei üblicherweise selbst keine Beschichtungsstoffe, Klebstoffe, Dichtungsmittel oder Formmassen, da sie entweder nicht zur Vernetzung und/oder Filmbildung befähigt sind oder keine beständigen Filme, Verklebungen oder Formteile ergeben. Die Mischung der Komponenten muss innerhalb einer bestimmten Zeit verarbeitet werden (Topfzeit bzw. Verarbeitungszeit), da sich die Verarbeitbarkeit nach Ablauf dieser Zeit zunehmend verschlechtert. Solche Zweikomponentensysteme werden insbesondere bei besonders hohen Anforderungen hinsichtlich der Temperaturempfindlichkeit des zu beschichtenden Objektes und/oder übermäßiger Objektgröße (Fassaden, Maschinen, Rotorblätter von Windkraftanlagen etc.), Beständigkeit gegen mechanische, chemische und klimatische Belastungen und rascher Härtung bei Raumtemperatur (23 °C) oder weniger, oder geringfügig erhöhter Temperaturen (bis beispielsweise 100 °C) eingesetzt. In der vorliegenden Erfindung werden als Zwei- oder Mehrkomponenten-Systeme solche verstanden, die aus mindestens zwei zunächst getrennt gelagerten Komponenten vor Gebrauch durch Vermischen hergestellt werden und nach dem Vermischen aushärten. Drei- oder Mehrkomponentensysteme unterscheiden sich von Zweikomponentensystemen nur darin, dass eine oder mehrere weitere Komponenten der Mischung zugefügt werden, wobei diese im Falle der chemischen Härtung an der chemischen Reaktion teilnehmen können oder diese einleiten oder die eine andere Aufgabe besitzen. Bei Zwei- oder Mehrkomponentensystemen, wird jede der Komponenten getrennt gelagert und erst bei Bedarf wird die vorzugsweise reaktionsfähige Mischung der Komponenten hergestellt.

Bei konventionellen Zwei- oder Mehrkomponentenmischungen muss die Viskosität jeder der Komponenten zunächst getrennt eingestellt werden, wobei große Viskositätsunterschiede zu vermeiden sind. Die Viskosität der einzelnen Komponenten ist dabei typischerweise bereits relativ hoch, was wiederum deren Transport aber auch eine homogene Vermischung oder Verarbeitung erschwert. Besondere Bedeutung besitzt daher das Einstellen einer zunächst möglichst niedrigen Viskosität der einzelnen Komponenten von Zwei- oder Mehrkomponentensystemen.

Gerade im Klebstoffbereich, stellt sich die Herausforderung, die Harz-Komponente und die Härter-Komponente zunächst jeweils auf eine möglichst niedrige Viskosität einzustellen, um eine möglichst gute und homogene Vermischbarkeit der Komponenten miteinander zu gewährleisten. Andererseits sollte sich beim und/oder vorzugsweise nach dem Vermischen der Komponenten möglichst rasch eine standfeste Konsistenz einstellen, die ein Zerfließen der Mischung verhindert. Nur so ist es möglich eine fertige Klebstoffmischung in Schichtdicken von mehreren Millimetern bis Zentimetern auf zu verklebende Substrate aufzubringen. Gerade bei großflächig zu verklebenden Substraten wie beispielsweise den Rotorblatthälften von Windkraftanlagen werden diesbezüglich hohe Anforderungen gestellt.

Wie in EP 281 124 A2 beschrieben, wird ein schnelles Erreichen einer standfesten, das heißt einer hochviskosen Konsistenz häufig durch Dispergieren eines Thixotropiermittels, wie beispielsweise einer hydrophilen, pyrogenen Kieselsäure in das Harz erreicht. Anschließend wird der Härter zugemischt. Vorausgesetzt, dass eine ausreichende Menge an Thixotropiermittel zugesetzt wird, behalten die Mischungen bis zur Gelierung und Härtung ihre Konsistenz.

EP 0 422 455 offenbart verdunstungsarme ungesättigte Polyesterharze, enthaltend A) einen ethylenisch ungesättigten Polyester, B) Styrol als polymerisierbares Monomer, C) Paraffine und D) pyrogene Kieselsäure.

CA 837 699 offenbart ungesättigte Polyesterharzzusammensetzungen, deren Viskosität mit der Zeit zunimmt, enthaltend a) einen ungesättigten Polyester, b) ein a, β- ungesättigtes Monomer und c) ein Verdickungsmittel in einer Menge, ausreichend zur Erhöhung der Viskosität der Zusammensetzung nach einer gewissen Zeit, bestehend aus einer Mischung aus anorganischen Magnesium- und Lithiumsalzen.

GB 1 446 007 offenbart eine Packung, die zwei voneinander getrennte Komponenten eines härtbaren Harzes enthält. Die eine Komponente enthält ein ungesättigtes Polyesterharz, ein Monomer, einen Gelierungsinhibitor, einen Gelierungsbeschleuniger und ein Verdickungsmittel und die andere Komponente enthält einen Peroxid-Katalysator, einen Füllstoff und ein Verdickungsmittel.

Nachteilig am vorgenannten System ist, dass mit pyrogener Kieselsäure gefüllte Systeme, wie die vor dem Vermischen eingesetzte Ausgangsharzmischung, welches für die Verdickungswirkung verantwortlich ist, zumindest teilweise zusammenbricht.

Ein Ansatz, um das Zusammenbrechen derartiger Netzwerke zu vermeiden und somit die Standfestigkeit beizubehalten besteht darin das Netzwerk zu verstärken. Dies gelingt beispielsweise durch Zugabe eines hochmolekularen Polyethylenimins mit einer gewichtsmittleren Molmasse von etwa 750000 g/mol, wie in EP 0 835 910 A1 beschrieben.

Bekannt sind auch Rheologieadditive auf Basis von Polyhydroxycarbonsäureamiden, die in Kombination mit pyrogener Kieselsäure in lösemittelhaltigen Systemen die Einarbeitung der Kieselsäure verbessern und das thixotrope Verhalten erhöhen und stabilisieren. Solche Produkte werden beispielsweise auch in den pyrogene Kieselsäure enthaltenden Zusammensetzungen, die in der WO 2010/147690 A2 beschrieben sind, gleichzeitig mit einem Dispergiermittel (Disperbyk-161), eingesetzt, um den Verlauf von Lacken zu verbessern.

Es besteht jedoch ein Bedarf insbesondere an UP-Harz-Systemen, die anorganische Verdicker enthalten, deren viskositätserhöhende Eigenschaft im entsprechenden System solange unterdrückt wird, das heißt inhibiert wird, bis diese Eigenschaft benötigt wird. Da gerade UP-Harz-Systeme üblicherweise nur sehr geringe bis gar keine Anteile an flüchtigen organischen Lösemitteln enthalten, ist deren Rheologieeinstellung besonders erschwert.

Ein chemischer Weg zur Lösung dieser Problematik wird im Bereich der Industrieklebstoffe für die Verklebung von Rotorblatthälften beispielsweise von Eva Bittmann im Artikel "Viel Wind um GFK. Werkstoffe und Verfahren im Rotorblattbau", Kunststoffe 92 (11) (2002) Seiten 119-124 dargestellt. In diesem Artikel wird der Einsatz unterschiedlicher Harzsysteme wie beispielsweise der Einsatz von Epoxidharzen, Vinylesterharzen oder ungesättigten Polyesterharzen zur Verklebung von Rotorblattkomponenten beschrieben. Es wird darauf hingewiesen, dass zur Verklebung von Schalen und Stegen dicke Klebenähte erforderlich sind, wobei das Material nicht an schrägen Flächen ablaufen darf, so dass hochthixotropierte Systeme zum Einsatz kommen müssen. Von der Firma Vantico wurde gemäß dem vorgenannten Artikel eine nicht näher beschriebene chemische Thixotropierung von Epoxidharzklebstoffen, die erst beim Mischen von Harz und Härter erfolgt und somit einen leichten Transport der niederviskosen Ausgangskomponenten und eine hohe Standfestigkeit der Mischung ermöglicht, entwickelt.

Im Bereich wässriger Systeme werden beispielsweise auch organische Verdicker auf Basis von Homo-, Co- und Terpolymeren der Acrylsäure und Methacrylsäure eingesetzt, die solange keine verdickende Wirkung zeigen, wie deren Carbonsäuregruppen protoniert sind. Erst durch eine zumindest teilweise Neutralisation entstehen durch die Bildung von Gelstrukturen in der Wasserphase über Wasserstoffbrückenbindungen, Assoziation von Wassermolekülen entlang der Polymerketten und intramolekularer Abstoßung und Entknäulung durch Bildung der Carboxylgruppen, hochviskose Lösungen. Derartige polymere Verdicker werden jedoch nicht in nicht-wässrigen Systemen eingesetzt.

Es ist daher nach wie vor äußerst wünschenswert auch UP-Harz-Systeme bereitzustellen, die latent verdickende anorganische Verdicker enthalten, die somit auch in nicht-wässrigen Systemen ihre verdickende Wirkung erst dann entfalten, wenn dies gewünscht ist.

Besonders vorteilhaft wäre es, wenn der Einsatz eines anorganischen Verdickers, zum Beispiel in Klebstoffen oder Dichtstoffen, gleichzeitig die Bindekraft des gehärteten Klebstoffs oder Dichtstoffs zu erhöhen vermag und dadurch die mechanische Stabilität des Klebeverbunds erhöht wird. Dies ist insbesondere beim Einsatz der Verbunde unter großer mechanischer Beanspruchung, beispielsweise bei Verklebungen von Rotorblättern nützlich, die dadurch größere mechanische Energie aufnehmen können.

Bislang steht kein UP-Harz-System auf der Basis latenter anorganischer Verdicker zur Verfügung, welches die oben angesprochenen Anforderungen erfüllt.

Aufgabe der vorliegenden Erfindung war es daher UP-Harz-Systeme zur Verfügung zu stellen, bei denen es sich vorzugsweise um Klebstoffe, Dichtstoffe, Beschichtungsmittel oder Formmassen handelt. Derartige Zwei- oder Mehrkomponentensysteme sollen in der Lage sein, nach Vermischen der Komponenten, insbesondere der Harzkomponente einerseits und der Initiator/Beschleuniger-Komponente andererseits die zunächst nur latent vorhandene Verdickungswirkung zu entfalten. Insbesondere sollten die Verdicker auch in der Lage sein die mechanischen Eigenschaften der gehärteten Zwei- oder Mehrkomponentensysteme zu verbessern, insbesondere deren Stabilität zu erhöhen.

Die vorstehenden Aufgaben konnten gelöst werden durch Bereitstellung eines Zwei- oder mehrkomponentiges System, umfassend

mindestens eine Polyester-Komponente 1, die

i. mindestens einen ungesättigten Polyester,
ii. mindestens ein ethylenisch ungesättigtes Monomer,
iii. mindestens einen anorganischen Verdicker (a1) und
iv. mindestens ein Netz- und Dispergiermittel (a2) umfasst, welches die Verdickungswirkung des anorganischen Verdickers (a1) inhibiert; und eine

mindestens eine Initiator-Komponente 2, die

i.) mindestens eine Komponente (b1) umfasst, welche die Inhibition der Verdickungswirkung des anorganischen Verdickers (a1) zumindest teilweise aufzuheben vermag, und
ii.) mindestens einen Initiator, der die Polymerisation der Komponenten i. und ii. der Polyester-Komponente 1 auszulösen vermag; und wobei das Netz- und Dispergiermittel (a2) gegenüber den Komponenten i. und ii. der Polyester-Komponente 1 nicht reaktiv ist.

Die Polyester-Komponente 1 und die Initiator-Komponente 2 stellen zwei räumlich getrennte Einzelkomponenten dar, die durch eine zielgerichtete Verwendung in funktioneller Einheit stehen ("Kit-of-Parts"). Im vorliegenden Fall liegt die zielgerichtete gemeinsame Verwendung der zunächst räumlich getrennten Komponenten darin, das zwei- oder mehrkomponentige System mit der latenten Verdickungseigenschaft auszustatten. Dies bedeutet, dass nach Vermischen der Komponenten 1 und 2, und gegebenenfalls weiterer Komponenten der Zwei- oder Mehrkomponentensysteme eine Viskositätserhöhung erfolgt.

Die Voraussetzung, dass das Netz- und Dispergiermittel (a2) gegenüber dem mindestens einen ungesättigten Polyester nicht reaktiv ist, versteht der Durchschnittsfachmann auf diesem Gebiet so, dass sich die Netz- und Dispergiermittel (a2) gegenüber dem ungesättigten Polyester unter den üblichen Lagerbedingungen vorzugsweise weitestgehend inert verhalten. Unter einem inerten Verhalten ist insbesondere ein chemisch inertes Verhalten zu verstehen. Dies bedeutet, dass die Polyester-Komponente 1, vorzugsweise weitestgehend lagerstabil ist. Die Lagerstabilität lässt sich beispielsweise über die Konstanz der Viskosität der gelagerten Polyester-Komponente 1 erfassen. Die Viskosität der Polyester-Komponente 1 soll sich, vorzugsweise auch über einen längeren Lagerzeitraum, nicht oder nur unwesentlich verändern. Derartige mögliche, wenngleich unerwünschte Viskositätserhöhungen werden jedoch nicht durch den erfindungsgemäßen Effekt hervorgerufen, da nicht alle benötigten Additive zur gleichen Zeit aufeinandertreffen, sondern räumlich in den verschiedenen Stammkomponenten (Polyester-Komponente1 und Initiator-Komponente 2) getrennt vorliegen. Es ist in jedem Fall bevorzugt, dass im Zeitraum zwischen der Einarbeitung des Netz- und Dispergiermittel (a2) in den ungesättigten Polyester der Polyester-Komponente 1 und der Vermischung der Polyester-Komponente 1 mit der Initiator-Komponente 2 keine Reaktion zwischen dem ungesättigten Polyester der Polyester-Komponente 1 und dem Netz- und Dispergiermittel (a2) erfolgt.

Ungesättigte Polyester sind vorzugsweise lineare, vorzugsweise lösliche Polykondensationsprodukte aus ungesättigten Dicarbonsäuren, wie Malein- und/oder Fumarsäure mit zweiwertigen Alkoholen, wobei ein Teil der alpha-, gammaungesättigten Dicarbonsäuren häufig durch gesättigte oder aromatisch ungesättigte Dicarbonsäuren ersetzt ist. Der Begriff "ungesättigte Polyesterharze" (UP-Harze) umfasst im erweiterten Sinne Lösungen von ungesättigten Polyestern in einem zur Copolymerisation befähigten Monomeren, meist Styren. Das Vernetzungsprinzip eines ungesättigten Polyesterharzes besteht darin, dass die vorzugsweise linearen ungesättigten Polyester, die Doppelbindungen enthalten, durch monomere, polymerisierbare Verbindungen (wie zum Beispiel Styren) miteinander verbunden, das heißt vernetzt werden. Diese in Gegenwart von Polymerisationsinitiatoren ablaufende Verknüpfung ist eine Mischpolymerisation oder - wie auch vorgeschlagen - eine Verbundpolymerisation oder vernetzte Pfropfpolymerisation. Von den allgemeinen Härtungsbedingungen und von dem eingesetzten Verhältnis des ungesättigten Polyesters zum ethylenisch ungesättigten Monomer hängt es ab, ob die Verknüpfung durch eine einzige Einheit des ethylenisch ungesättigten Monomers, vorzugsweise Styren, oder durch eine Kette dieser Monomere erfolgt (siehe Kittel, "Lehrbuch der Lacke und Beschichtungen", Band 2, Zweite Auflage, 1998, S. 473-485).

Die beiden Komponenten, ethylenisch ungesättigtes Monomer und ungesättigter Polyester, reagieren durch Zugabe eines Initiators. Bei der konventionellen Härtung (Vernetzung) eignen sich als Polymerisationsinitiatoren vorzugsweise Peroxide und Hydroperoxide. Werden Peroxide oder Hydroperoxide als Initiatoren in der Initiator-Komponente 2 eingesetzt, so enthält die Polyester-Komponente 1 üblicherweise einen sogenannten Beschleuniger, der bewirkt, dass diese Initiatoren in Radikale zerfallen. Geeignete Initiatoren sind organische Metallverbindungen oder tertiäre aromatische Amine. Als Initiator kann in der Initiator-Komponente 2 aber auch ein Photoinitiator enthalten sein, vorzugsweise ein Photoinitiator des Benzoin- oder Benzil-Typs. In einem solchen Fall bedarf es keines Beschleunigers in der Polyester-Komponente 1, da die Radikalbildung vorzugsweise durch UV-Strahlen eingeleitet wird (Kittel, ibid).

Die erfindungsgemäßen Zwei- und Mehrkomponenten-Systeme sind vorzugsweise nicht-wässrige, besonders bevorzugt von flüchtigen organischen Lösemitteln freie oder im Wesentlichen von flüchtigen organischen Lösemitteln freie Zwei- oder Mehrkomponentensysteme.

Im Rahmen der Erfindung werden solche Systeme als nicht-wässrig bezeichnet, die im Wesentlichen wasserfrei sind, das heißt vorzugsweise solche, die weniger als 10 Gew.-%, besonders bevorzugt weniger als 8 Gew.-% und ganz besonders bevorzugt weniger als 5 Gew.-% an Wasser bezogen auf die Gesamtzusammensetzung des Systems enthalten.

Im Wesentlichen frei von flüchtigen organischen Lösemitteln bedeutet, dass vorzugsweise weniger als 15 Gew.-%, besonders bevorzugt weniger als 10 Gew.-% und ganz besonders bevorzugt weniger als 5 Gew.-% an flüchtigen organischen Lösemitteln, bezogen auf das Gesamtgewicht des erfindungsgemäßen Zwei- oder Mehrkomponentensystems an flüchtigen organischen Lösemitteln im erfindungsgemäßen Zwei- oder Mehrkomponentensystem enthalten sind.

## Polyester-Komponente 1

### Ungesättigte Polyester

Der ungesättigte Polyester ist im Allgemeinen nach den für die Alkydharze gebräuchlichen Verfahren herstellbar. Vor allem die azeotrope Veresterung als eine Variante der Schmelzkondensation für besonders empfindliche Ausgangsmaterialen hat Bedeutung erlangt. Als Schleppmittel für entstehendes Reaktionswasser kann beispielsweise Toluol oder Xylol eingesetzt werden. Da die eingesetzten Monomere, insbesondere zumindest ein Teil der Dicarbonsäuren ungesättigt sind, muss die Reaktion unter Ausschluss von Luftsauerstoff, vorzugsweise unter Inertgasatmosphäre durchgeführt werden, um keine vorzeitige Polymerisation auszulösen. Möglichst sollten die Veresterungstemperaturen 150 bis 200 °C nicht überschreiten. Der Polymerisationsfortschritt kann durch Bestimmung der Säurezahl und Viskosität überwacht werden. Meist wird noch die warme Schmelze mit dem ethylenisch ungesättigten Monomeren, welches besonders bevorzugt Styren ist, gemischt. Damit hierbei keine vorzeitige Polymerisation eintritt, werden vorzugsweise dem ethylenisch ungesättigten Monomer, und gegebenenfalls auch der Schmelze des ungesättigten Polyesters Inhibitoren zugesetzt wie beispielsweise Toluhydrochinon, Hydrochinon oder tert. Butylcatechol (Kittel, ibid).

Die zwingend in den ungesättigten Polyestern enthaltenen polymerisationsfähigen Kohlenstoff-Kohlenstoff-Doppelbindungen können prinzipiell in der Dicarbonsäurekomponente oder der Diolkomponente oder beiden vorliegen. Technische Bedeutung haben aber nur solche ungesättigten Polyesterharze erhalten, bei welchen die polymerisationsfähige Kohlenstoff-Kohlenstoff-Doppelbindung in den Dicarbonsäuren enthalten ist.

Als ungesättigte Dicarbonsäuren zur Herstellung der ungesättigten Polyester werden vorzugsweise Maleinsäure und Fumarsäure eingesetzt, wobei die Maleinsäure insbesondere als Maleinsäureanhydrid eingesetzt wird. Maleinsäure beziehungsweise Maleinsäureanhydrid ist die wirtschaftlich günstigste ungesättigte Dicarbonsäure. Fumarsäure führt im Vergleich zur Maleinsäure zu Produkten mit höherer mechanischer Festigkeit und Chemikalienbeständigkeit, sie ist auch reaktiver als die Maleinsäure. Weniger gebräuchlich jedoch prinzipiell als ungesättigte Dicarbonsäuren einsetzbar, sind beispielsweise auch die Mesaconsäure, Citraconsäure und Itaconsäure.

Da ungesättigte Polyester mit sehr hohem Gehalt an Kohlenstoff-Kohlenstoff-Doppelbindungen nach der Polymerisation hochvernetzte und somit relativ spröde Endprodukte liefern, werden üblicherweise nicht nur ungesättigte Dicarbonsäuren bei der Herstellung der ungesättigten Polyester eingesetzt, sondern auch aliphatische oder cycloaliphatische Dicarbonsäuren und/oder aromatische Dicarbonsäuren.

Als aliphatische Dicarbonsäure kommt beispielsweise die Adipinsäure in Betracht, wobei diese den polymerisierten ungesättigten Polyesterharzen üblicherweise eine höhere Flexibilität verleiht. Die cycloaliphatische Tetrahydrophthalsäure verleiht Filmen die aus den ungesättigten Polyesterharzen hergestellt werden hingegen üblicherweise eine höhere Härte. Für bestimmte Anwendungen im Bereich der duromeren Kunststoffe können auch tetrachlorierte oder tetrabromierte Phthalsäure bzw. deren Anhydrid eingesetzt werden.

Als aromatische Dicarbonsäuren finden insbesondere Phthalsäure bzw. deren Anhydrid Verwendung und liefern gehärtete Polyester mit guter Elastizität. Ferner können als aromatische Dicarbonsäuren beispielsweise Isophthalsäure und Terephthalsäure eingesetzt werden, insbesondere bei der Herstellung duromerer Kunststoffe.

Als Alkoholkomponente werden nahezu ausschließlich Diole eingesetzt, da höherfunktionelle Alkohole wie beispielsweise Triole bereits zu verzweigten und somit sehr viskosen ungesättigten Polyestern führen. Daher werden vorzugsweise ausschließlich Diole bei der Herstellung ungesättigter Polyesterharze eingesetzt.

Vorzugsweise werden als Diole gewählt aus der Gruppe bestehend aus 1,2-Propandiol, 1,3-Propandiol, Ethylenglykol, Diethylenglykol, Dipropylengylkol, Triethylenglykol, Neopentylglykol, 2-Methyl-2-ethyl-propandiol-1,3, hydriertes Bisphenol A oder oxalkylierte Bisphenole eingesetzt.

Zur Überwindung der Sauerstoffinhibierung des Polymerisationsvorgangs üblicher ungesättigter Polyesterharz können auch Mono- und Diallylether von Glycerin und Trimethylolpropan und/oder Di- und Triallylether des Pentaerythrits in den ungesättigten Polyester eingebaut werden.

Ethylenisch ungesättigte Monomere

Unter dem Begriff der ethylenisch ungesättigten Monomere werden im Fachgebiet solche Monomere verstanden, die eine Kohlenstoff-Kohlenstoff-Doppelbindung enthalten. Die Kohlenstoff-Kohlenstoff-Doppelbindung kann dabei beispielsweise in einer Vinylgruppe, einer Allylgruppe, Acrylatgruppe, Methacrylatgruppe oder einem nicht-endständigen Bereich des Monomers vorliegen. Die ethylenisch ungesättigten Monomere sollten vorzugsweise einen niedrigen Dampfdruck besitzen, das ungesättigte Polyesterharz zu lösen vermögen, eine niedrige Viskosität der Lösung erzielen und eine gute Coolymerisierbarkeit gegenüber dem ungesättigten Polyester besitzen.

Besonders bevorzugte ethylenisch ungesättigte Monomere können aus der Gruppe bestehend aus Styren, alpha-Methylstyren, Methylacrylat, Methylmethacrylat, Vinylacetat, Divinylbenzol, Diallylphthalat, Triallylcyanurat und Triallylphosphat, gewählt werden. Ganz besonders bevorzugt ist Styren.

Üblicherweise beträgt der Anteils des ethylenisch ungesättigten Monomers, bezogen auf die Summe des Gewichts aus ungesättigtem Polyester und ethylenisch ungesättigtem Monomer bei 20 bis 50 Gew.-%, besonders bevorzugt 25 bis 40 Gew.-%.

Weitere für die erfindungsgemäßen Zwei- oder Mehrkomponenten-Systeme geeignete ungesättigte Polyester und ethylenisch ungesättigte Monomere sind beispielsweise in den Patentschriften EP2447293B1 oder EP2411441B1 exemplarisch offenbart.

Anorganische Verdicker (a1)

Der anorganische Verdicker (a1), wird vorzugsweise aus der Gruppe bestehend aus Schichtsilikaten und amorphen Kieselsäuren, besonders bevorzugt Schichtsilikaten und gefällten oder pyrogenen Kieselsäuren gewählt. Gefällte Kieselsäuren werden nasschemisch durch Ausfällung erhalten, während pyrogene Kieselsäuren durch kontinuierliche Flammenhydrolyse erhalten werden.

Unter den anorganischen Verdickern sind insbesondere die Schichtsilikate und pyrogenen Kieselsäuren bevorzugt. Im Gegensatz zu den nasschemisch gewonnenen Kieselsäuren (gefällte Kieselsäuren), welche zumeist sehr hohe innere Oberflächen besitzen, bestehen flammenhydrolytisch gewonnene Kieselsäuren aus nahezu kugelförmigen Primärteilchen mit Teilchendurchmessern von typischerweise 7 bis 40 nm. Sie weisen im Wesentlichen nur eine äußere Oberfläche auf. Diese Oberfläche ist teilweise mit Silanolgruppen besetzt. Der hohe Anteil freier Silanolgruppen verleiht unbehandelter pyrogener Kieselsäure einen hydrophilen Charakter. Es ist jedoch auch möglich, jedoch kostspieliger, die ursprünglich hydrophile Oberfläche pyrogener Kieselsäuren organisch nachzubehandeln, beispielsweise mit Dimethyldichlorsilan, Trimethoxyoctylsilan oder Hexamethyldisilazan, wobei der überwiegende Teil der Silanolgruppen durch organische Gruppen abgesättigt wird und somit die hydrophile Kieselsäure hydrophobiert wird. Die pyrogenen Kieselsäuren können somit in Form nicht-organisch modifizierter pyrogener Kieselsäuren oder hydrophob modifizierter pyrogener Kieselsäuren vorliegen, wobei die nicht-organisch modifizierten pyrogenen Kieselsäuren besonders bevorzugt sind.

Bei den Schichtsilikaten sind insbesondere Tonmaterialien bevorzugt, unter diesen besonders bevorzugt sind die organisch modifizierten Tonmaterialien (auch als Organoclay bezeichnet).

Ganz besonders bevorzugt als anorganischer Verdicker (a1) sind Schichtsilikatmischungen, die mit quartären Alkylammoniumsalzen oberflächenbehandelt wurden und die zu 50 bis 95 Gew.-% bezogen auf die Schichtsilikatmischung, ein Tonmineral gewählt aus der Gruppe bestehend aus Sepiolith und Palykorskit oder deren Mischungen umfassen und zu weniger als 50 Gew.-%, bezogen auf die Schichtsilikatmischung mindestens eines Smektits enthalten. Vorzugsweise ergänzen sich die 50 bis 95 Gew.-% an Sepiolith und/oder Palykorskit mit dem mindestens einen Smektit zu wenigstens 95 Gew.-%, besonders bevorzugt zu 100 Gew.-%, bezogen auf die Schichtsilikatmischung.

Das Smektit oder die Smektite können wiederum vorzugsweise aus der Gruppe bestehend aus Hektorit, Montmorillonit, Bentonit, Beidelit, Saponit, Stevensit sowie Mischungen daraus gewählt werden.

Die quartären Alkylammoniumsalze lassen sich vorzugsweise wiedergeben durch die allgemeine Formel $(C_{1-10}\text{-alkyl})_n(C_{12-22}\text{-alkyl})_m(\text{Benzyl})_p\ N^+\ X^-$, wobei n+m+p = 4 und n = 1 oder 2, m = 1 oder 2, p = 0 oder 1 und $X^-$ = Halogenid, vorzugsweise Chlorid, oder Sulfat. Besonders bevorzugte quartäre Alkylammoniumsalze sind Dimethyl-di($C_{14-18}$-alkyl) ammoniumchlorid, Methyl-Benzyl-di($C_{14-18}$-alkyl)ammoniumchlorid, Dimethyl-Benzyl-($C_{14-18}$-alkyl)ammoniumchlorid, Dimethyl-(2-Ethylhexyl)-($C_{14-18}$-alkyl)ammoniumsulfat. Beim obigen $C_{14-18}$-Alkylrest handelt es sich vorzugsweise um einen hydrierten Talg-Alkylrest.

Besonders bevorzugt wird die zuvor beschriebene Schichtsilikatmischung mit 5 bis 80 Milliäquivalenten des quartären Alkylammoniumsalzes behandelt.

Derartige Verdicker sind von der Firma BYK Chemie GmbH, Wesel, Deutschland unter der Handelsbezeichnung Garamite® erhältlich.

Weitere anorganische Verdicker (a1) der Kategorie der Schichtsilikate sind beispielsweise unter den Handelbezeichnungen Laponite®, Claytone® oder Cloisite® ebenfalls von der BYK Chemie GmbH erhältlich.

Netz- und Dispergiermittel (a2)

An das Netz- und Dispergiermittel (a2) wird im Wesentlichen die Anforderung gestellt, dass dieses die Verdickungswirkung des anorganischen Verdickers (a1) inhibiert (latente Verdickung).

Bei den Netz- und Dispergiermitteln (a2) handelt es sich um solche, die eine oder mehrere verdickeraffine Gruppen X aufweisen und somit kovalent, ionisch und/oder durch Physisorption an die Verdickeroberfläche binden. Im Übrigen bewirken sie eine Stabilisierung der Verdickerprimärteilchen und verhindern somit eine Agglomeration, die sonst zur Sedimentation der Feststoffe und somit Separation des Mahlgutsystems führt. Für diese Stabilisierung sind in der Regel ein oder mehrere Gruppen Y im Netz- und Dispergiermitteln (a2) verantwortlich, die für die Verträglichkeit mit dem umgebenden Medium sorgen.

Bevorzugt handelt es sich bei eingesetzten Netz- und Dispergiermitteln (a2) um höhermolekulare Netz- und Dispergiermittel (a2), insbesondere polymere Netz- und Dispergiermittel (a2). Geeignete funktionelle Polymere besitzen vorzugsweise eine zahlenmittlere Molekularmasse ($M_n$) von mindestens 400 g/mol, vorzugsweise mindestens 800 g/mol, bevorzugt mindestens 2000 g/mol. Das maximale Molekulargewicht $M_n$ liegt zweckmäßig bei 100000 g/mol, bevorzugt bei 50000 g/mol und besonders bevorzugt bei 25000 g/mol. Die zahlenmittleren Molekulargewichte sind mittels Gelpermeationschromatographie gegen einen Polystyrol-Standard bestimmbar.

Insbesondere kann das erfindungsgemäß eingesetzte Netz- und Dispergiermittel (a2) ausgewählt sein aus der Gruppe von linearen oder verzweigten Polymeren und Copolymeren mit funktionellen und/oder verdickeraffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen verdickeraffinen Gruppen, gegebenenfalls modifizierten Acrylatblockcopolymeren, gegebenenfalls modifizierten Polyurethanen, gegebenenfalls modifizierten und/oder gegebenenfalls versalzten Polyaminen, Epoxid-Amin-Addukten, Phosphorsäureestern insbesondere von Polyethern, Polyestern und Polyether-Estern, basischen oder sauren Ethoxylaten wie alkoxylierten Mono- oder Polyaminen oder sauren 1,2-Dicarbonsäureanhydridhalbestern von alkoxylierten Monoalkoholen, Reaktionsprodukte von ungesättigten Fettsäuren mit Mono-, Di- und Polyaminen, Aminoalkoholen, und ungesättigten 1,2-Dicarbonsäuren und deren Anhydriden und deren Salze und Umsetzungsprodukte mit Alkoholen und/oder Aminen; Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen und/ oder aminofunktionellen Polyestern, Polyphosphaten sowie deren Mischungen.

Bevorzugt werden als Netz- und Dispergiermittel (a2) insbesondere solche Verbindungen ausgewählt, wie sie in den Druckschriften, EP 0 154 678 B1, EP 0 270 126 B1, EP 0 318 999 B1, EP 0 417 490 B1, EP 0 879 860 B1, EP 0 893 155 B1, EP 1081 169 B1, EP 1416 019 A1, EP 1486 524 A1, EP 1593 700 B1, EP 1640 389 A1, EP 1650 246 A1, EP 1742 90, EP 1803 753, EP 1837 355, EP 2668240, WO 2012175159, WO 2012175157, DE 102006048144, DE 102006062439, DE 102006062440, DE 102006062441 und DE 102007005720 beschrieben sind, besonders bevorzugt sind die in der EP 0 893 155 B1 und der EP 2668240 beanspruchten Netz- und Dispergiermitteln (a2).

Polymere Netz- und Dispergiermittel (a2) auf der Basis von Polyisocyanaten sind beispielsweise in der EP 0 154 678, der EP 318 999 und der EP 0 438 836 beschrieben. Diese Produkte werden durch Addition von Monohydroxyverbindungen, diisocyanatfunktionellen Verbindungen und Verbindungen mit einer tertiären Aminogruppe an die vorliegenden NCO-Gruppen von Isocyanurat-, Biuret-, Urethan- und/oder Allophanatgruppen aufweisenden Polyisocyanaten hergestellt.

In einer bevorzugten Ausführungsform werden Netz- und Dispergiermittel (a2) eingesetzt, die erhältlich sind durch Versalzung einer aminfunktionellen Verbindung mittels einer Säure, wobei als aminfunktionelle Verbindung ein Polyamin mit zumindest drei Aminogruppen aus der Gruppe "nicht-modifizierte, aliphatische lineare oder verzweigte Polyamine der Gruppe: "Diethylentriamin, Triethylentetramin, Tetraethylenpentamin, Pentaethylenhexamin, Hexamethylenheptamin, lineare Polymerisate der allgemeinen Formel $NH_2$-$(C_2H_4NH)_n$-$C_2H_4$-$NH_2$ mit n>5, wobei bei diesen Protonen am Stickstoff gegen Alkyl-, Aryl- und/oder Aralkylgruppen ausgetauscht sein können und/oder der Stickstoff quaternisiert vorliegen kann, verzweigte $(C_2$-$C_4)$-Alkylenamine und Poly$(C_2$-$C_4)$alkylenimine mit tertiären Aminogruppen und einem zahlenmittleren Molekulargewicht bis zu 1000000 g/mol oder eine Mischung solcher Amine"; modifizierte Polyamine auf Basis der vorgenannten nicht-modifizierten Polyamine, wobei es sich bei diesen um mit Mono- oder Polyisocyanaten, die v NCO-Gruppen besitzen von denen (v-1) NCO-Gruppen vorher mit anderen Reaktanden reagiert haben, umgesetzte Polyamine, mit epoxyfunktionellen Stoffen umgesetzte Polyamine, mit cyclischen Carbonaten umgesetzte Polyamine, mittels einer Michael-Reaktion mit $\alpha,\beta$-ungesättigten Verbindungen umgesetzte Polyamine, alkylierte und/oder quaternisierte Polyamine und/oder mit Carbonsäuren amidierte Polyamine handelt, mit der Maßgabe, daß nach der Modifikation noch drei versalzbare Aminogruppen pro Molekül vorhanden sind, oder eine Mischung solcher Polyamine und/oder Polyamine der Gruppe: "Homo- oder Copolymerisate von aminfunktionellen (Meth)acrylaten oder Vinylverbindungen, sowie aminfunktionelle Homo- oder Copolymere deren Aminogruppe mittels polymeranaloger Reaktion in das vorgefertigte Polymer eingefügt oder an diesem Polymer erzeugt wurde, oder eine Mischung solcher Polyamine", wobei das Homo- oder Copolymerisat ein zahlenmittleres Molekulargewicht von bis zu 1000000 g/mol aufweist" verwendet wird und wobei als Säure ein Stoff aus der Gruppe "Phosphorsäureester der allgemeinen Formel: $(OH)_{3-n}PO(OR^a)_n$ mit n = 1 oder 2, Sulfonsäuren der allgemeinen Formel $HOSO_2R^b$, saure Schwefelsäureester der allgemeinen Formel $HOSO_3R^b$", wobei $R^a$ und $R^b$ einen Alkyl-, Aryl- oder Aralkylrest mit mindestens 5 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und/oder einer Urethangruppe mit einem zahlenmittleren Molekulargewicht zwischen 100 und 5000 g/mol darstellt, oder eine Mischung solcher Stoffe, wobei $R^a$ und $R^b$ gleich oder verschieden sind und gegebenenfalls Wasserstoffatome in den aliphatischen Gruppen der Reste $R^a$ und $R^b$ teilweise durch Halogenatome ersetzt sind und die Säure gegebenenfalls weitere, sich bei der Versalzung inert verhaltende funktionelle Gruppen trägt, verwendet wird; und pro Molekül mindestens eine Aminogruppe versalzt ist.

Folgende Gruppen von Netz- und Dispergiermitteln (a2) zeigen eine besonders gute Wirkung in den erfindungsgemäßen Dispersionen: (a) Phosphorestersalze von aminogruppenhaltigen Oligomeren oder Polymeren, wie beispielsweise Phosphorestersalze von gegebenenfalls fettsäuremodifizierten oder alkoxylierten (insbesondere ethoxylierten) Polyaminen, Phosphorestersalze von Epoxid-Polyamin-Addukten, Phosphorestersalze von aminogruppenhaltigen Acrylat- oder Methacrylatcopolymeren und Phosphorestersalze von Acrylat-Polyamin-Addukten, (b) Mono- oder Diester der Phosphorsäure, wie beispielsweise Mono- oder Diester der Phosphorsäure mit Alkyl, Aryl-, Aralkyl- oder Alkylaryl-Alkoxylaten (z.B. Phosphorsäuremono- oder diester von Nonylphenolethoxylaten, Isotridecylalkoholethoxylaten, butanolgestarteten Alkylenoxidpolyethern), Mono- oder Diester der Phosphorsäure mit Polyestern (z. B. Lactonpolyestern, wie Caprolactonpolyestern oder gemischten Caprolacton/Valerolacton-Polyestern), (c) sauere Dicarbonsäurehalbester, beispielsweise sauere Dicarbonsäurehalbester (insbesondere der Bernsteinsäure, Maleinsäure oder Phthalsäure) mit Alkyl, Aryl-, Aralkyl- oder Alkylaryl-Alkoxylaten (z.B. Nonylphenolethoxylaten, Isotridecylalkoholethoxylaten oder butanolgestarteten Alkylenoxidpolyethern), (d) Polyurethan-Polyamin-Addukte, (e) polyalkoxylierte Mono- oder Diamine (z.B. ethyoxyliertes Oleylamin oder alkoxyliertes Ethylendiamin) (f) Reaktionsprodukte von ungesättigten Fettsäuren mit Mono-, Di- und Polyaminen, Aminoalkoholen, und ungesättigten 1,2-Dicarbonsäuren und deren Anhydriden und deren Salze und Umsetzungsprodukte mit Alkoholen und/oder Aminen.

Derartige Netz- und Dispergiermittel (a2) sind als Handelsprodukte zum Beispiel von der Firma BYK-Chemie aus Wesel unter den Handelsbezeichnungen BYK-220 S, BYK-P 9908, BYK-9076, BYK-9077, BYK-P 104, BYK-P 104 S, BYK-P 105, BYK-W 9010, BYK-W 920, BYK-W 935, BYK-W 940, BYK-W 960, BYK-W 965, BYK-W 966, BYK-W 975, BYK-W 980, BYK-W 990, BYK-W 995, BYK-W 996, BYKUMEN, BYKJET 9131, LACTIMON, ANTI-TERRA-202, ANTI-TERRA-203, ANTI-TERRA-204, ANTI-TERRA-205, ANTI-TERRA-206, ANTI-TERRA-207, ANTI-TERRA-U 100, ANTI-TERRA-U 80, ANTI-TERRA-U, LP-N-21201, LP-N-6918, DISPERBYK, DISPERBYK-101, DISPERBYK-102, DISPERBYK-103, DISPERBYK-106, DISPERBYK-107, DISPERBYK-108, DISPERBYK-109, DISPERBYK-110, DISPERBYK-111, DISPERBYK-112, DISPERBYK-115, DISPERBYK-116, DISPERBYK-118, DISPERBYK-130, DISPERBYK-140, DISPERBYK-142, DISPERBYK-145, DISPERBYK-160, DISPERBYK-161, DISPERBYK-162, DISPERBYK-163, DISPERBYK-164, DISPERBYK-165, DISPERBYK-166, DISPERBYK-167, DISPERBYK-168, DISPERBYK-169, DISPERBYK-170, DISPERBYK-171, DISPERBYK-174, DISPERBYK-176, DISPERBYK-180, DISPERBYK-181, DISPERBYK-182, DISPERBYK-183, DISPERBYK-184, DISPERBYK-185, DISPERBYK-187, DISPERBYK-190, DISPERBYK-191, DISPERBYK-192, DISPERBYK-193, DISPERBYK-194, DISPERBYK-2000, DISPERBYK-2001, DISPERBYK-2008, DISPERBYK-2009, DISPERBYK-2010, DISPERBYK-2020, DISPERBYK-2025, DISPERBYK-2050, DISPERBYK-2070, DISPERBYK-2090, DISPERBYK-2091, DISPERBYK-2095, DISPERBYK-2096, DISPERBYK-2150, DISPERBYK-2151, DISPERBYK-2152, DISPERBYK-2155, DISPERBYK-2163, DISPERBYK-2164, DISPERPLAST-1010, DISPERPLAST-1011, DISPERPLAST-1012, DISPERPLAST-1018, DISPERPLAST-I, DISPERPLAST-P erhältlich. Soweit ein niedriger Gehalt an flüchtigen organischen Verbindungen insbesondere an organischen Lösemitteln erwünscht ist, sollten die obengenannten Handelsprodukte möglichst als lösemittefreie Wirksubstanz eingesetzt werden und gegebenenfalls zum Beispiel durch Destillation von flüchtigen Bestandteilen ganz oder teilweise befreit werden.

Unter der Inhibierung der Verdickungswirkung wird verstanden, dass der anorganische Verdicker (a1) durch Anwesenheit des Netz- und Dispergiermittels (a2) zumindest einen Teil seiner sonst vorhandenen viskositätserhöhenden Wirkung einbüßt. Diese Einbuße der Viskositätserhöhung beruht auf einer Wechselwirkung zwischen dem Verdicker und dem Netz- und Dispergiermittel. Die Inhibierung der Verdickungswirkung, das heißt der Verdickungsverlust bzw. die Herabsetzung der Verdickungswirkung des anorganischen Verdickers (a1) durch das Netz- und Dispergiermittel (a2) lässt sich, wie im Beispielteil gezeigt, auch prozentual angeben. Hierbei wird als Basiswert für die Viskosität die Viskosität einer Formulierung, jedoch ohne Zusatz des Netz- und Dispergiermittels (a2) gemessen und mit einer identischen Formulierung, die jedoch das Netz- und Dispergiermittel (a2) enthält, verglichen. Hieraus wird der prozentuale Abfall der Viskosität bedingt durch das Vorhandensein des Netz- und Dispergiermittels (a2) berechnet. Vorzugsweise beträgt dieser mindestens 10%, besonders bevorzugt mindestens 20%, ganz besonders bevorzugt mindestens 40% oder mindestens 80% oder gar mindestens 90% bis vorzugsweise 99,9%. Die Viskosität wird wie im Beispielteil angegeben bestimmt.

Die Inhibierung der Verdickungswirkung wird vorzugsweise durch eine reversible Bindung der Netz- und Dispergiermittel (a2) an die Oberfläche des anorganischen Verdickers (a1) bewirkt.

Eine reversible Bindung des Netz- und Dispergiermittels (a2) sollte bei Temperaturen vorliegen, unter denen üblicherweise Zwei- oder Mehrkomponentensysteme gemischt werden. Vorzugsweise liegt eine Reversibilität bei Temperaturen unterhalb 80 °C, besonders bevorzugt bei Temperaturen unterhalb 50 °C und ganz besonders bevorzugt bei Temperaturen unterhalb 30 °C, wie insbesondere bei Raumtemperatur (23°C) vor.

Um eine Reversibilität der Bindung zu gewährleisten wird das Netz- und Dispergiermittel (a2) vorzugsweise so gewählt, dass schwache intermolekulare Wechselwirkungen, wie beispielsweise Van-der-Waals-Wechselwirkungen, Dipol-Dipol-Wechselwirkungen, oder Wasserstoffbrückenbindungen zur Oberfläche des anorganischen Verdickers ausgebildet werden, welche verhindern, dass sich die rheologischen Eigenschaften des anorganischen Verdickers teilweise oder vollständig entfalten.

Die Netz- und Dispergiermittel (a2) verhalten sich vorzugsweise im Wesentlichen chemisch inert gegenüber den weiteren Bestandteilen der Polyester-Komponente 1.

Die im Wesentlichen chemische Inertheit gegenüber den Bestandteilen der Polyester-Komponente 1, kann im Wesentlichen auf zwei Arten erreicht werden. Eine Möglichkeit besteht darin, dass das ein Netz- und Dispergiermittel verwendet wird, das keine Gruppen enthält, die gegenüber vorgenannten Bestandteilen reaktiv sind oder durch katalytische Aktivität unerwünschte Reaktionen auslöst. Eine zweite Möglichkeit besteht darin, solche Netz- und Dispergiermittel zu verwenden, in welchen zwar potentiell reaktive Gruppen enthalten sind, diese jedoch beispielsweise sterisch so abgeschirmt sind, dass eine Reaktion mit den Bestandteilen der Polyester-Komponente 1, unter Lagerbedingungen nicht oder vernachlässigbar langsam, stattfindet.

Als im Rahmen der vorliegenden Erfindung besonders geeignete, vielseitig einsetzbare Netz- und Dispergiermittel (a2), erweisen sich Netz- und Dispergiermittel, die ein aminogruppenhaltiges polymeres Rückgrat besitzen, an welches Polyester- und/oder Polyether- und/oder Polyester- sowie Polyether-Seitenketten angebracht sind. Derartige Netz- und Dispergiermittel eignen sich besonders für solche anorganischen Verdicker (a1), die gewählt sind aus der Gruppe der Schichtsilikate, gefällten Kieselsäuren und pyrogenen Kieselsäuren, insbesondere der Schichtsilikate und pyrogenen Kieselsäuren, und besonders bevorzugt der Schichtsilikate und der nicht-organisch modifizierten pyrogenen Kieselsäuren. Die Polyester- und/oder Polyether- und/oder Polyester- sowie Polyether-Seitenketten derartiger Netz- und Dispergiermittel können beim Anreiben der anorganischen Verdicker zusammengedrückt werden, wobei die Haftkräfte der aminischen Gruppen gegenüber der Verdickeroberfläche verstärkt werden. Die verdickeraffinen aminischen Gruppen können dann an die Verdickeroberfläche adsorbieren, während die Seitenketten, die aminischen Gruppen, abschirmen. Daher können derartige Netz- und Dispergiermittel, die abgeschirmte aminische Gruppen enthalten, auch in Verbindung mit solchen Komponenten erfindungsgemäßer Zwei- oder Mehrkomponenten-Systemen eingesetzt werden, die eigentlich gegenüber aminischen Gruppen reaktiv sind. Zugleich schirmt das Netz- und Dispergiermittel den anorganischen Verdicker (a1) ab und hindert diesen an der vollständigen oder teilweisen Entfaltung seiner verdickenden Wirkung.

Besonders geeignet sind beispielsweise Reaktionsprodukte aus (a.) Polyhydroxymonocarbonsäuren, die vorzugsweise polyestermodifiziert sind, mit (b.) Aziridinhomopolymeren, die vorzugsweise polyestermodifiziert sind und (c.) Monoisocyanaten, die Polyesterreste, Polyetherreste, Polyester-Polyetherreste oder den Rest einer Hydroxycarbonsäure tragen, letztgenannte Verbindungen lassen sich beispielsweise durch Umsetzung einer Isocyanatgruppe eines Diisocyanats mit der Hydroxylgruppe einer Hydroxycarbonsäure erhalten. Derartige Produkte sind beispielsweise in der EP 2 668 240 A1 offenbart.

Als im Rahmen dieser Erfindung besonders geeignetes Netz- und Dispergiermittel (a2) ist beispielsweise das bisher nur für Pigmente und Füllstoffe empfohlene hochverzweigte Netz- und Dispergiermittel DISPERBYK-2151, der BYK Chemie GmbH einsetzbar. Dieses Netz- und Dispergiermittel ermöglicht eine hervorragende Dispergierung von Schichtsilikaten, gefällten Kieselsäuren und pyrogenen Kieselsäuren, insbesondere Schichtsilikaten und pyrogenen Kieselsäuren, in einer Vielzahl chemisch unterschiedlicher Komponenten. So besteht beispielsweise eine Verträglichkeit mit ungesättigten Polyestern, wie sie in erfindungsgemäßen Zwei- oder Mehrkomponentensystemen eingesetzt werden.

Die Verträglichkeit des Netz- und Dispergiermittels mit dem jeweiligen System ist für den Durchschnittsfachmann direkt ersichtlich, wenn beispielsweise aufgrund des Nichtvorhandenseins komplementärer reaktiver Gruppen keine Reaktion zu erwarten ist oder die entsprechenden Gruppen sterisch abgeschirmt sind. Somit steht grundsätzlich eine Vielzahl an geeigneter Netz- und Dispergiermitteln zur Verfügung. Eine Einzelfallprüfung, ob eine sterische Abschirmung potentiell reaktiver Gruppen im Netz- und Dispergiermittel ausreichend ist, um dieses in einem bestimmten erfindungsgemäßen Zwei- oder Mehrkomponentensystem einzusetzen, kann vom Durchschnittsfachmann anhand einfacher orientierender Versuche erfolgen.

Die Kombination aus anorganischem Verdicker (a1) und mindestens einem Netz- und Dispergiermittel (a2), kann bei Raumtemperatur (23°C) fest sein. So kann diese Kombination vorzugsweise ein mit einem Netz- und Dispergiermittel (a2) beschichteter anorganischer Verdicker (a1) sein, vorzugsweise in Pulverform.

Da die Netz- und Dispergiermittel (a2) häufig in der Form eingesetzt werden, in welcher sie bei der Synthese anfallen, können die Netz- und Dispergiermittel (a2) herstellungsbedingt auch für die Synthese eingesetzte Hilfsstoffe wie beispielsweise Katalysatoren, Emulgatoren und dergleichen enthalten. Derartige Hilfsstoffe werden als zum Festkörper der Kombination aus anorganischem Verdicker (a1) und mindestens einem Netz- und Dispergiermittel (a2) gehörig angesehen.

Beschleuniger

Die im Fachgebiet so genannten Beschleuniger, auch Aktivatoren oder Acceleratoren genannt, besitzen die Aufgabe, den Peroxidzerfall, in den Peroxiden und Hydroperoxiden, der im Allgemeinen erst bei erhöhter Temperatur eintritt, bereits bei Raumtemperatur (23 °C) einzuleiten.

Beschleuniger werden daher dann eingesetzt, wenn es sich bei den Initiatoren um Peroxide beziehungsweise Hydroperoxide handelt. Beim Einsatz von Photoinitiatoren in UV-härtenden ungesättigten Polyesterharzen entfällt der Einsatz eines Beschleunigers, da in einem solchen Fall die UV-Strahlung deren Aufgabe übernimmt. Daher ist der Einsatz von Beschleunigern fakultativ und nur abhängig vom jeweiligen Initiator.

Bevorzugte Beschleuniger werden gewählt aus der Gruppe bestehend aus Schwermetallsalzen und tertiären aromatischen Aminen.

Im Rahmen der vorliegenden Erfindung werden jedoch die tertiären aromatischen Amine weniger bevorzugt eingesetzt, diese unter Umständen ungünstig in die Wechselwirkung der anorgansichen Verdicker (a1) mit den Netz- und Dispergiermitteln (a2) eingreifen könnten und die Herabsetzung der Viskosität des anorganischen Verdickers (a1) mit den Netz- und Dispergiermittel ganz oder teilweise verhindern könnten.

Dennoch sollen hier auch typische Vertreter aus der Gruppe der tertiären aromatischen Beschleuniger genannt werden, die im Gegensatz zu den weiter unten genannten Schwermetallsalzen, nicht katalytisch wirken, sondern beim Peroxidzerfallsprozess verbraucht werden. Es sind insbesondere zu nennen die in para- und meta-Stellung substituierten N,N-Dialkylaniline, N,N-Dialkyl-p-toluidin, und Mercaptane.

Als Schwermetallsalze sind insbesondere die vorzugsweise organischen Salze des Kobalts, Eisens, Vanadiums und Mangans zu nennen. Darunter ganz besonders bevorzugt sind die organischen Salze des Kobalts, wie beispielsweise Kobalt(II)-octanoat, insbesondere Kobalt(II)-2-Ethylhexanoat, oder Kobalt(II)-Naphthenat.

Die Beschleuniger auf Schwermetallbasis sind insbesondere für Hydroperoxide Peroxide geeignet. Ein typisches Verhältnis von Kobalt zu (Hydro)peroxid liegt bei 0,001 bis 0,01, insbesondere bei etwa 0,005.

Weitere Bestandteile der Polyester-Komponente 1

Die Polyester-Komponente 1 kann neben dem ungesättigten Polyester, dem ethylenisch ungesättigten Monomer, dem anorganischen Verdicker (a1) und dem Netz- und Dispergiermittel (a2), sowie den gegebenenfalls enthaltenen Beschleunigern auch weitere Bestandteile enthalten.

Als weitere Bestandteile sind Lösemittel, insbesondere flüchtige organische Lösemittel, und/oder Wasser zu nennen. Üblicherweise sind die erfindungsgemäßen Zwei- oder Mehrkomponenten-Systeme frei oder im Wesentlichen frei von flüchtigen organischen Lösemitteln und/oder Wasser wie oben bereits erwähnt wurde.

Darüberhinaus kann die Polyester-Komponente 1 weitere Additive enthalten, wie sie in Klebstoffen, Dichtstoffen, Beschichtungsmitteln und Formmassen üblich sind. Insbesondere sind hierunter Entschäumer, von den Netz- und Dispergiermitteln (a2) verschiedene Netz- und Dispergiermittel oder Verlaufmittel, Katalysatoren und insbesondere Pigmente und von den anorganischen Verdickern (a1) verschiedene anorganische Füllstoffe, oder auch organische Füllstoffe, zu nennen.

**Initiator-Komponente 2**

Initiator

Als Initiatoren kommen, wie oben bereits dargelegt, Peroxide, Hydroperoxide und Photoinitiatoren in Frage. Letztere werden mit UV-Strahlung aktiviert, die quasi als Beschleuniger dient.

Peroxide lassen sich typischerweise mit den oben genannten tertiären aromatischen Aminen beschleunigen, teils auch mit Schwermetallsalzen, für Hydroperoxide werden üblicherweise Schwermetallsalze als Beschleuniger eingesetzt, so dass sich folgende bevorzugte Initiator/Beschleuniger-Kombinationen ergeben: Hydroperoxide/Schwermetallsalze, Peroxide/tertiäre aromatische Amine und Photoinitiatoren/"UV -Strahlung".

Vorzugsweise werden Hydroperoxide des Methylethylketons, Cyclohexanons und/oder des Acetylacetons in Kombination mit organischen Kobalt(II)-Salzen eingesetzt oder Dibenzoylperoxid in Kombination mit einem tertiären aromatischen Amin. Während vorstehende Kombinationen bereits bei Raumtemperatur (23 °C) funktionieren, werden bei Härtungstemperaturen von etwa 60 bis 120 °C vorzugsweise Kombinationen aus Methylisobutylketonperoxid mit organischen Kobalt(II)-Salzen eingesetzt.

Da die Peroxide und Hydroperoxide relativ instabile Verbindungen sind, wird diesen zur Herabsetzung der Gefährlichkeit häufig sogenannte Phlegmatisierungsmittel zugesetzt, um diese weniger schlagempfindlich auszustatten. Also Phlegmatisierungsmittel können geringe Mengen Wasser, organische Lösemittel und/oder bestimmte organische Weichmacher wie insbesondere Phthalsäureester dem Peroxid beziehungsweise Hydroperoxid zugesetzt werden.

Komponente (b1)

Komponente (b1) ist dadurch gekennzeichnet, dass sie die durch das Netz- und Dispergiermittel (a2) hervorgerufene Inhibition der Verdickungswirkung des anorganischen Verdickers (a1) zumindest teilweise aufhebt.

Es kann sich hierbei um monomere Verbindungen oder oligomere oder polymere Spezies handeln, wobei hierin sprachlich nicht zwischen oligomeren und polymeren Spezies unterschieden wird. Oligomere Spezies werden daher im Folgenden unter die polymeren Spezies subsumiert. Insbesondere sind auch einige der oben als Härter aufgeführten Spezies gleichzeitig als Komponente (b1) geeignet.

Die Bindung der Komponente (b1) erfolgt dabei vorzugsweise unter zumindest teilweiser Verdrängung des Netz- und Dispergiermittels (a2) von der Verdickeroberfläche, was bedeutet, dass die Wechselwirkung der Komponente (b1) mit der Oberfläche des anorganischen Verdickers (a1) in der Regel stärker ist, als die Wechselwirkung des Netz- und Dispergiermittels (a2) mit der Oberfläche des anorganischen Verdickers (a1).

Daher sind die verdickeraffinen Gruppen der Komponente (b1) üblicherweise nicht abgeschirmt. Eine höhere Affinität kann jedoch auch erhalten werden, wenn die Komponenten (b1) beispielsweise eine größere Anzahl an verdickeraffinen Gruppen im Vergleich zum Netz- und Dispergiermittel (a2) aufweisen und/oder die Art der affinen Gruppen eine stärkere Bindung an die Oberfläche des Verdickers erlauben.

Essentiell ist, dass die Komponente (b1) die Inhibierung der Verdickungswirkung des anorganischen Verdickers (a1) durch das Netz- und Dispergiermittel (a2) zumindest teilweise wieder aufhebt. Besonders bevorzugt wird die Verdickungswirkung des Verdickers nicht nur ganz oder zumindest teilweise wiederhergestellt, sondern sogar die Standfestigkeit stabilisiert, indem beispielsweise das interne Netzwerk aus Wasserstoffbrücken zwischen den Verdickerpartikeln durch die Komponente (b1) verstärkt wird.

Eine geeignete Komponente (b1), welche beispielsweise affiner gegenüber pyrogenen Kieselsäuren ist, als das oben ebenfalls beispielhaft erwähnte Netz- und Dispergiermittel DISPERBYK-2151, ist das hochmolekulare Polyethylenimin mit einer gewichtsmittleren Molmasse von etwa 750000 g/mol, wie es in der oben zitierten EP 0 835 910 A1 beschrieben ist. Dieses ist nicht nur in der Lage die Inhibierung der Verdickungswirkung des Verdickers durch das Netz- und Dispergiermittel zumindest teilweise aufzuheben, es stabilisiert darüber hinaus das die Standfestigkeit bedingende Netzwerk zwischen den Verdickerpartikeln. Aber auch andere polymere Amine und fettsäureversalzte Polyethylenimine, vorzugsweise tallölfettsäureversalzte Polyethylenamine sind als Komponente (b1) geeignet.

Weitere geeignete Komponenten (b1) sind beispielsweise Kondensationsprodukte aus Dimer- und/oder Trimerfettsäuren, die auch in Mischung mit monomeren Fettsäuren eingesetzt werden können, mit Aminen. Als Amine sind hierfür insbesondere aliphatische und cycloaliphatische oder auch aromatische Amine oder Mischungen der vorgenannten Amine geeignet. Beispiele für derartige Amine sind m-Xylylendiamin, 1,6-Diaminohexan, Isophorondiamin (Isomerengemisch; IPDA), Triethylentetramin (TETA); Diethylentriamin, Tetraethylenpentamin, Pentaethylenhexamin (Isomerengemisch), 1,3-Diaminopropan, Dipropylentriamin oder 2-(2-(2-Aminoethylamino)ethylamino)ethanol oder Diethanolamin.

Als Komponente (b1) sind auch nicht polymere Mono- und vorzugsweise Polyamine geeignet, insbesondere solche, die molekular einheitlich sind und/oder vergleichsweise niedrige zahlenmittlere Molekulargewichte $M_n$ besitzen wie beispielsweise Polyalkylenpolyamine wie beispielsweise Triethylentetramin, aber auch cycloaliphatische Diamine wie beispielsweise Isophorondiamin.

Ebenfalls geeignet sind Monoetheramine wie Diglykolamin (DGA), aber insbesondere auch Polyetheramine wie beispielsweise solche, die unter der Handelsbezeichnung Jeffamine® von der Firma Huntsman käuflich erhältlich sind wie Jeffamine® T-403.

Ebenfalls geeignet sind Polyethylenoxidpolyole wie beispielsweise Polyoxyethylensorbitanmonolaurat (TWEEN 20).

Komponente (b1) kann flüssig oder fest sein. Vorzugsweise ist die Komponente (b1) flüssig.

Da die Komponente (b1) häufig in der Form eingesetzt wird, in welcher sie bei der Synthese anfällt, kann Komponente (b1) herstellungsbedingt auch für die Synthese eingesetzte Hilfsstoffe wie beispielsweise Katalysatoren, Stabilisatoren und dergleichen enthalten.

Die Auswahl einer geeigneten Komponente (b1) erfolgt vorzugsweise gezielt unter Berücksichtigung der Wahl des Netz- und Dispergiermitels (a2).

So besitzt die Komponente (b1) üblicherweise polarere und/oder basischere, oberflächenaffine Gruppen als das Netz- und Dispergiermittel (a2), wobei sich die Oberflächenaffinität auf die Oberfläche des anorganischen Verdickers (a1) bezieht. Sind im Netz- und Dispergiermittel (a2) ähnlich polare und/oder basische, oberflächenaffine Gruppen enthalten wie in Komponente (b1), so enthält Komponente (b1) vorzugsweise einen größeren gewichtsprozentualen Anteil an oberflächenaffinen Gruppen in Komponente (b1), verglichen mit dem gewichtsprozentualen Anteil an oberflächenaffinen Gruppen, die im Netz- und Dispergiermittel (a2) enthalten sind. Besonders bevorzugt enthält Komponente (b1), im Vergleich zum Netz- und Dispergiermittel (a2), nicht nur einen größeren gewichtsprozentualen Anteil an Gruppen, die gegenüber der Oberfläche des anorganischen Verdickers (a1) affin sind, sondern auch oberflächenaffine Gruppen, die im Vergleich zu den oberflächenaffinen Gruppen des Netz- und Dispergiermittels (a2) polarer und/oder basischer sind, ganz besonders bevorzugt solche oberflächenaffine Gruppen, die im Vergleich zu den oberflächenaffinen Gruppen des Netz- und Dispergiermittels (a2) polarer und basischer sind.

Andererseits bedeutet dies, dass bei der Wahl des Netz- und Dispergiermittels (a2), nicht das für eine Dispergierung des anorganischen Verdickers (a1) "beste" Netz- und Dispergiermittel gewählt werden muss oder sollte, welches die maximale Viskositätserniedrigung bezüglich der Inhibierung der Verdickungswirkung liefert. Eine zu starke Bindung des Netz- und Dispergiermittels (a2) an die Verdickeroberfläche ist gerade nicht gewünscht, um es der Komponente (b1) nicht unnötig zu erschweren das Netz- und Dispergiermittel (a2) von der Oberfläche des anorganischen Verdickers (a1) zu verdrängen.

Ziel ist somit eine ausreichende bis sehr gute Viskositätsreduzierung durch das Netz- und Dispergiermittel (a2) zu erreichen, jedoch nicht eine perfekte Dispergierung des anorganischen Verdickers (a1), die es ermöglicht, dass in einem zweiten Schritt, die Komponente (b1) eine sehr gute bis perfekte Wechselwirkung mit der Oberfläche des anorganischen Verdickers (a1) eingeht und so eine Viskositätssteigerung eintritt.

Das Netz- und Dispergiermittel (a2) wird vorzugsweise so gewählt, dass es nur wenige verdickeraffine Gruppen aufweist. So sind auch hinsichtlich der verdickeraffinen Gruppen monofunktionelle Netz- und Dispergiermittel (a2) vorteilhaft einsetzbar. Enthalten diese nicht nur eine verdickeraffine Gruppe, so ist es vorteilhaft wenn die verdickeraffinen Gruppen räumlich nahe zueinander angeordnet sind. Dies bewirkt, dass diese nicht befähigt sind ein ausgeprägtes stabilisierendes Netzwerk aufzubauen.

Hingegen gilt für die Komponente (b1), dass diese der sterischen Stabilisierung des anorganischen Verdickers (a1) durch das Netz- und Dispergiermittel entgegenwirkt und eine sehr gute bis perfekte Wechselwirkung mit der Verdickeroberfläche eingeht.

Als Struktureinheiten, die in die Berechnung des Haftgruppenanteils im Netz- und Dispergiermittel (a2) beziehungsweise der Komponente (b1) eingehen, sind nur die in der folgenden Tabelle "Haftgruppen" angegebenen Struktureinheiten anzusehen, die in verschiedenen Gruppierungen in (a2) und (b1) vorkommen.

Tabelle "Haftgruppen"

| Strukturelement | Gruppierung in (a2) beziehungsweise (b1) | |
|---|---|---|
| C(O)N | Amid aus sekundären Aminen | |
| C(O)NH | Amid aus primären Aminen | |
| C(O)NH$_2$ | Amid aus Ammoniak | |
| OH | Alkohol | |
| N-C=N | Imidazolin | |
| NC(O)N | Harnstoff aus sekundären Aminen | |
| HNC(O)NH | Harnstoff aus primären Aminen | |
| NH$_2$ | primäres Amin | |
| NH | sekundäres Amin | |
| N | tertiäres Amin | |
| XNH$_3$ | Ammoniumsalz aus primären Aminen | wobei X für das Anion einer Säuregruppe steht |
| XNH$_2$ | Ammoniumsalz aus sekundären Aminen* | |
| XNH | Ammoniumsalz aus tertiären Aminen** | |
| OP(O)(OH)2 | organischer Phosphorsäureester | |

(fortgesetzt)

| Strukturelement | Gruppierung in (a2) beziehungsweise (b1) |
|---|---|
| C(O)OH | Carbonsäure |
| * Beispiel: Ammoniumcarboxylat aus sekundärem Amin = COONH$_2$ <br> ** Beispiel: Ammoniumchlorid aus tertiärem Amin = CINH | |

Die Berechnung erfolgt typischerweise ausgehend von den für die Synthese von (a2) und (b1) einzusetzenden Ausgangsverbindungen und den daraus zu erwartenden Strukturelementen, wobei von einem 100 %-igen Umsatz ausgegangen werden darf oder es werden in Kenntnis der Struktur, die Strukturelemente aus den Verbindungen abgeleitet.

Als allgemeines Auswahlkriterium gilt, dass Netz- und Dispergiermittel (a2) im Vergleich zu den Komponenten (b1) einen deutlich geringeren gewichtsprozentualen Anteil an Haftgruppen, bezogen auf das Gesamtgewicht des Netz- und Dispergiermittels (a2) besitzen, als dies für die Spezies der Komponente (b1) der Fall ist. Generell hat sich herausgestellt, dass in dieser Erfindung bevorzugt einsetzbare Netz- und Dispergiermittel (a2) einen gewichtsprozentualen Anteil Strukturelementen von Haftgruppen von vorzugsweise < 11 Gew.-% bezogen auf das gesamte Netz- und Dispergiermittel (a2) besitzen, während in Komponente (b1) der gewichtsprozentuale Anteil an Strukturelementen der Haftgruppen vorzugsweise ≥ 11 Gew.-% beträgt.

Diese Grenzen sind nicht scharf, dienen jedoch der gezielten Auswahl der entsprechenden Komponenten. Für besonders bevorzugte Netz- und Dispergiermittel (a2) gilt, dass obiger Strukurelementeanteil < 9 Gew.-%, besonders bevorzugt < 6 Gew.-%, und ganz besonders bevorzugt < 4 Gew.-%, sogar < 3 Gew.-% beträgt, während für bevorzugte Komponenten (b1) der obige Strukturelementeanteil vorzugsweise >13 Gew.-% besonders bevorzugt >20 Gew.-%, ganz besonders bevorzugt sogar >30 Gew.- % oder gar >40 Gew.-% beträgt.

Der Strukturelementeanteil im Netz- und Dispergiermittel (a2) sollte jedoch vorzugsweise nicht unter 0,5 Gew.-%, besonders bevorzugt nicht unter 0,8 Gew.-% liegen, da sonst die verdickungsinhibierende Wirkung aufgrund mangelnder Affinität zur Verdickeroberfläche nicht ausreichend ist.

Vorzugsweise beträgt die Differenz der gewichtsprozentualen Anteile an Strukturelementen im Netz- und Dispergiermittel (a2) zum gewichtsprozentualen Anteil an Strukturelementen in der Komponenten (b1) mindestens 2 Gew.-%, besonders bevorzugt mindestens 5 Gew.-%, und ganz besonders bevorzugt mindestens 10 Gew.-%.

Selbstverständlich geht in die obigen Berechnungen nur das Netz- und Dispergiermittel (a2) beziehungsweise die Komponente (b1) ein, jeweils ohne eventuell vorhandene Lösemittel oder andere Hilfsstoffe die synthesebedingt vorhanden sein können.

Als allgemeine Affinitätsreihe verschiedener oberflächenaffiner Gruppen für typische Verdickeroberflächen kann folgende Abstufung gelten:

[Gruppe 1]: Imidazoline ≥ (Amine, Ammoniumverbindungen)
[Gruppe 2]: Alkohole ≥ (Harnstoffe, Amide, Carbonsäuren, Phosphorsäureester), wobei die Gruppen der Gruppe 1 im allgemeinen affiner gegenüber der Verdickeroberfläche des anorganischen Verdickers (a1) sind, als die der Gruppe 2, also [Gruppe 1] > [Gruppe 2] gilt.

Generell gilt, dass affinere Gruppe vorzugsweise in Komponente (b1) vorhanden sind, während die Netz- und Dispergiermittel (a2) vorzugsweise eher weniger affine Gruppen enthalten sollten.

Im Allgemeinen gilt, dass das Netz- und Dispergiermittel (a2) und die Komponente (b1) so gewählt werden, dass sie eine oder mehrere der folgenden funktionellen Gruppen gewählt aus
Gruppe 1: bestehend aus

- Imidazolylgruppen, mit dem Strukturelement N-C=N,
- Aminogruppen mit den Strukturelementen N für tertiäre Amine, NH für sekundäre Amine und NH$_2$ für primäre Amine und
- Ammoniumgruppen mit dem Strukturelement NH$^+$X$^-$ für Ammoniumsalze aus tertiären Aminen, mit dem Strukturelement NH$_2^+$X$^-$ für Ammoniumsalze aus sekundären Aminen und NH$_3^+$X$^-$ für Ammoniumsalze aus primären Aminen, worin jeweils X$^-$ für das Anion einer Säure steht;

und/oder
Gruppe 2: bestehend aus

- Hydroxylgruppen mit dem Strukturelement OH,
- Harnstoffgruppen mit dem Strukturelement HNC(O)CNH für Harnstoffe aus primären Aminen und NC(O)CN für Harnstoffe aus sekundären Aminen,
- Amidgruppen, mit dem Strukturelement C(O)N für Amide aus sekundären Aminen, C(O)NH für Amide aus primären Aminen und $C(O)NH_2$ für Amide aus Ammoniak,
- Carbonsäuregruppen mit dem Strukturelement COOH und
- organischen Phosphorsäureestergruppen mit dem Strukturelement $OP(O)(OH)_2$

enthalten, und dabei

(A) der gewichtsprozentuale Anteil an Strukturelementen im Netz- und Dispergiermittel (a2), gewählt aus den funktionellen Gruppen der Gruppen 1 und 2, bezogen auf das Gewicht des Netz- und Dispergiermittels (a2) niedriger ist als der gewichtsprozentuale Anteil an Strukturelementen in Komponente (b1), gewählt aus den funktionellen Gruppen der Gruppen 1 und 2, bezogen auf das Gewicht der Komponente (b1); und/oder

(B) Komponente (b1) einen gewichtsprozentual höheren Anteil an Strukturelementen aus den funktionellen Gruppen gewählt aus Gruppe 1, bezogen auf das Gewicht der Komponente (b1) enthält, als das Netz- und Dispergiermittel (a2) an Strukturelementen aus den funktionellen Gruppen gewählt aus Gruppe 1, bezogen auf das Gewicht des Netz- und Dispergiermittels (a2).

Die Auswahlregeln erlauben es zuverlässig geeignete Paare von Netz- und Dispergiermitteln (a2) einerseits, und Komponenten (b1) andererseits zu wählen. Das Ausmaß der Viskositätssteigerung durch Komponente (b1) ist jedoch von weiteren Faktoren abhängig wie beispielsweise den Strukturen der Netz- und Dispergiermittel (a2) und der Komponente (b1), was jedoch lediglich eine Frage der Stärke des Effekts ist, nicht jedoch die Ausführbarkeit der Erfindung gefährdet.

Häufig und im Allgemeinen lässt sich das Ausmaß der Viskositätssteigerung dadurch erhöhen, dass die Menge der Komponente (b1) in Bezug auf das Netz- und Dispergiermittel (a2) erhöht wird.

Das Gewichtsverhältnis des Netz- und Dispergiermittels (a2) zum zur Komponente (b1) vorzugsweise etwa 25:1 bis 1:10, besonders bevorzugt 20:1 bis 1:8, ganz besonders bevorzugt 15:1 bis 1:6 beträgt.

Üblicherweise gilt für das Verhältnis (a2) zu (b1), dass (a2) im Überschuss, bezogen auf das Gewicht der beiden Komponenten eingesetzt wird, das heißt, (a2):(b1) = >1:1, besonders bevorzugt bis 15:1. Sollte die Steigerung der Verdickungswirkung in einem solchen Fall nicht ausreichend sein, so empfiehlt sich eine Erhöhung der Menge an (b1) bis zu einem Verhältnis von typischerweise (a2):(b1) = 1:5. Es ist selbstverständlich möglich die Menge an (b1) auch über dieses Verhältnis hinaus zu erhöhen. In letzterem Fall empfiehlt es sich jedoch stattdessen gegebenenfalls eine potentere Komponente (b1) einzusetzen, welche mehr und/oder verdickeraffinere funktionelle Gruppen aufweist.

Weitere Bestandteile der Initiator-Komponente 2

Auch die Initiator-Komponente 2 kann weitere organische Lösemittel und/oder Wasser, sowie weitere Additive enthalten, wie sie in Klebstoffen, Dichtstoffen, Beschichtungsmitteln und Formmassen üblich sind. Es sei diesbezüglich auf die weiteren Bestandteile der Polyester-Komponente 1 verwiesen.

Bei den erfindungsgemäßen zwei- oder mehrkomponentigen Systemen handelt es sich vorzugsweise um Klebstoffe, Dichtstoffe, Beschichtungsmittel oder Formmassen.

Typische Anwendungsgebiete für die erfindungsgemäßen ungesättigten Polyester-Zwei- oder Mehrkomponenten-Systeme sind die Möbellackierung, die Bootslackierung, die Herstellung von Lacken und Spachtelmassen, insbesondere für Metalle und mineralische Untergründe, wie Naturstein, die Imprägnierung von Fasern, Geweben und Vliesstoffen, wobei das Material der Fasern, Gewebe oder Vliesstoffe vorzugsweise der Gruppe bestehend aus Kohlenstoff, Glas, Mineralstoffen und organischen Polymeren, angehört. Vorzugsweise dienen die erfindungsgemäßen Zwei- oder Mehrkomponentensysteme daher der Herstellung von Verbundmaterialien, insbesondere füllstoff- und/oder faserverstärkten Kunststoffen.

Weiterer Gegenstand der vorliegenden Erfindung ist die Verwendung des latenten Verdickers in einer gegenüber dem latenten Verdicker inerten Formulierung, um die Formulierung mit einem latenten Verdickungseffekt auszurüsten. Bei der Formulierung handelt es sich vorzugsweise um eine Formulierung enthaltend einen ungesättigten Polyester wie er in der vorliegenden Erfindung beschrieben ist.

Die Zwei- oder Mehrkomponenten-Systeme der vorliegenden Erfindung sind generell für alle zu verklebenden, zu beschichtenden oder abzudichtenden Substrate geeignet. Beispielhaft können als geeignete Substratmaterialien Glas, Metalle und deren Legierungen, Kunststoffe wie beispielsweise auch Verbundwerkstoffe, lackierte Oberflächen, Folien, Papier und Kartonagen, Holz, Eternit, Beton, Gewebe wie beispielsweise Stoffe oder Teppichmaterialien, Fliesen viele, weitere andere Materialen genannt werden.

Im Folgenden wird die Erfindung anhand von Beispielen näher beschrieben.

## BEISPIELE

## HERSTELLUNGSBEISPIELE

Bei molekular uneinheitlichen Substanzen stellen die angegebenen Molekulargewichte - im Folgenden wie schon in der vorstehenden Beschreibung - Durchschnittswerte des Zahlenmittels dar. Die Molekulargewichte beziehungsweise zahlenmittleren Molekulargewichte $M_n$ werden bei Vorhandensein bestimmbarer funktioneller Endgruppen wie Hydroxy-, NCO-, Amino- oder Säuregruppen durch Endgruppenbestimmung über die Ermittlung von OH-Zahl, NCO-Zahl, Aminzahl bzw. Säurezahl durch Titration ermittelt. Bei Verbindungen, auf die eine Endgruppenbestimmung nicht anwendbar ist, wird das zahlenmittlere Molekulargewicht mittels Gelpermeationschromatographie gegen einen Polystyrolstandard bestimmt. Bei den Polyaminen angegebene Molekulargewichte sind ebullioskopisch bestimmte Zahlenmittel $M_n$.

Sofern nicht anders ausgeführt, handelt es sich bei Angaben in Teilen um Gewichtsteile und bei Angaben in Prozenten um Gewichtsprozente.

Viskositätsmessungen

Die Viskositäten der Stammkomponenten und der Mischungen aus den Stammkomponenten wurden - soweit nicht anderes angegeben ist - an einem Stresstech-Gerät der Firma Rheologica via Platte-Kegel-Methode bestimmt (Kegeldurchmesser 25 mm; Kegelwinkel: 1°; Spalt Kegel-Platte: 35 $\mu$m ; Temperatur: 23 °C; Scherrate 1 s$^{-1}$; Anzahl der Messpunkte: 21; Ausgleichszeit 10 s; Messzeit pro Messpunkt: Verzögerungszeit + Integrationszeit; Verzögerungszeit: 5-8 s; Integrationszeit: 3 s; Regelstärke (Empfindlichkeit): 60%).

Die Messungen an Zwei-, Drei- und Mehrkomponenten-Systemen wurden 2 Minuten nach deren Herstellung durchgeführt.

Die Viskositäten der Stammkomponenten und der Mischungen aus den Stammkomponenten wurden - soweit die Brookfieldmethode angegeben ist- an einem Brookfield-DV-II + Viscometer der Firma Brookfield via Spindel-Methode bestimmt (Spindel 3; 5rpm, Temperatur: 23 °C; Meßzeit pro Messpunkt: 1 min).

Die Messungen an Zwei-, Drei- und Mehrkomponenten-Systemen wurden 2 Minuten nach deren Herstellung durchgeführt.

Bestimmung des Gehalts an tertiärem Stickstoff

Der Gehalt an tertiärem Stickstoff gibt den prozentualen Gehalt an gebundenem tertiärem Basenstickstoff in einer zu untersuchenden Probe an. Bei der Bestimmungsmethode wird ausgenutzt, dass tertiäre Amino-Gruppen - im Gegensatz zu primären und sekundären Amino-Gruppen - nicht mit Anhydriden zu Amiden reagieren. Werden primäre und sekundäre Amino-Gruppen mit Essigsäureanhydrid acetyliert, so können die tertiären Amino-Gruppen anschließend mit Perchlorsäure quantitativ titriert werden. Zur Bestimmung des Gehalts an tertiärem Stickstoff einer Probe wird eine zu untersuchende Menge einer Probe auf 0,1 mg genau in einem 80ml-Becherglas auf einer Analysenwaage abgewogen. Die einzuwiegende Menge der zu untersuchende Menge richtet sich nach dem zu erwartenden Gehalt an tertiärem Stickstoff und ist der nachstehenden Tabelle zu entnehmen:

| Erwarteter Gehalt an tertiärem Stickstoff [%] | Einzuwiegende Probenmenge [g] |
|---|---|
| 0 - 0,3 | 3 - 5 |
| 0,3 - 0,6 | 1,5 - 3 |
| 0,6 - 0,9 | 1,0 - 1,5 |
| 0,9 - 1,5 | 0,6 - 1,0 |
| 1,5 - 2,0 | 0,45 - 0,6 |
| 2,0 - 3,0 | 0,30 - 0,45 |
| 3 - 5 | 0,15 - 0,30 |
| 5 - 10 | 0,08 - 0,15 |

(fortgesetzt)

| Erwarteter Gehalt an tertiärem Stickstoff [%] | Einzuwiegende Probenmenge [g] |
|---|---|
| 10 - 20 | 0,06 - 0,08 |

Die Probe wird in 20 ml Essigsäure (99,8%-ig) und 30 ml Essigsäureanhydrid (98,5 %-ig) gelöst. Anschließend wird die so erhaltene Probenlösung mit einem Schliffdeckel versehen über eine Dauer von 30 Minuten bei 70°C im Thermoblock oder Wasserbad erwärmt. Nach dem Abkühlen der Probenlösung wird diese auf einen Magnetrührer gestellt und in die Probenlösung eine Ag/AgCl-Einstabelektrode eingetaucht. Die Einstabelektrode ist Teil eines Mikroprozessor-gesteuerten Analysengeräts (Titrator DL77, DL70 ES oder DL67) der Firma Mettler. Die Probenlösung wird mit Perchlorsäure (0,1 N in Essigsäure, anhydridfrei) titriert. Die Bestimmung des Gehalts an tertiärem Stickstoff erfolgt durch das eingesetzte Analysengerät. Der Gehalt an tertiärem Stickstoff berechnet sich dabei wie folgt:

$$\text{Tertiärer N-Gehalt (Gew.-\%)} = \frac{\text{Verbrauch ml} \quad x \quad N \quad x \quad f \quad x \quad 1{,}4008}{\text{Einwaage in g}}$$

N = Normalität des Titrationsmittels
f = Faktor des Titrationsmittels

Der Faktor f berücksichtigt dabei gegebenenfalls die Abweichung des eingesetzten Titrationsmittels von einer Normalität von 0,1 N.

### Anorganische Verdicker (a1)

Als anorganische Verdicker wurden zwei verschiedene Arten käuflich erhältlicher pyrogener Kieselsäure eingesetzt (erhältlich von der Firma Evonik Industries), die sich in ihrer BET-Oberfläche unterscheiden, nämlich:

**(a1.1)** = Aerosil® 200 (BET 200) und
**(a1.2)** = Aerosil® 380 (BET 380).

Des Weiteren wurden drei verschiedene modifizierte Schichtsilikat-Gemische, käuflich erhältlich von der Firma Byk Chemie GmbH unter der Bezeichnung Marke Garamite® eingesetzt, nämlich:

**(a1.3)** = Garamite® 7305 (mit quarternären Ammoniumverbindungen modifizierte Mischung verschiedener Bentonite)
**(a1.4)** = Garamite® 1210 (mit quarternären Ammoniumverbindungen modifizierte Mischung verschiedener Benton) und
**(a1.5)** = Garamite® 1958 (mit quarternären Ammoniumverbindungen modifizierte Mischung verschiedener Benton)

### Netz- und Dispergiermittel (a2)

### Herstellung von (a2.1)

#### Vorstufe A

30 g Epomin SP-018 (Fa. Nippon Shokubai) werden auf 80 °C erhitzt. Über einen Zeitraum von zwei Stunden werden 70 g 2-Ethylhexylacrylat zugetropft, anschließend wird sechs Stunden nachreagieren gelassen.

#### Vorstufe B

92 % Polyether (Butanol-gestarteter EO/PO-Polyether (ca. 1:1), Mw ca. 1100 Da) wird auf 60 °C erhitzt. 7,6 g Polyphosphorsäure werden langsam zugetropft. Die Reaktionsmischung rührt sechs Stunden, bis die Säurezahl (Säurezahl gemäß DIN EN ISO 2114) im Kolben nicht weiter ansteigt.

Synthese der Verbindung aus den Vorstufen A und B

20 g der Vorstufe A werden bei 60 °C vorgelegt und 80 g Vorstufe B werden langsam, über einen Zeitraum von zwei Stunden zudosiert. Die Reaktionsmischung rührt fünf Stunden bei 60 °C.

Das erhaltene Produkt weist einen Wirksubstanzgehalt von 100 % auf.

**Herstellung von (a2.2)**

In einem Reaktionsgefäß werden 205 g Tetrahydrofuran vorgelgt und 0,11 mL 1M Tetrabutylammonium-3-chlorobenzoat in Acetonitril und 1,94 g 1-Methoxy-1-trimethylsiloxy-2-methylpropan zugegeben. Das Reaktionsgefäß wurde auf -10 °C gekühlt. Parallel zu einer Zugabe über 40 Minuten einer Mischung bestehend aus 39,6 g 2-Ethylhexylmethacrylat, 20 g Methylmethacrylat und 2,84 g Butylmethacrylat wurde über einen Zeitraum von einer Stunde eine Anlösung von 0,22 mL 1M Tetrabutylammonium-3-chlorobenzoat in Acetonitrilin 5 mL Tetrahydrofuran zugeführt. Die Reaktionstemperatur überstieg zu keinem Zeitpunkt die Temperatur von 25 °C. Anschließend wurden 20,9 g N,N-Dimethylaminoethylmethacrylat über einen Zeitraum von 10 Minuten zugetropft, parallel werden weitere 0,11 mL 1M Tetrabutylammonium-3-chlorobenzoat in Acetonitril über einen Zeitraum von 10 Minuten zudosiert. Nach weiteren drei Stunden Rühren bei Raumtemperatur (23 °C) wurden 5 mL Methanol zugegeben. Nach Zugabe von 6,7 g Benzylchlorid wird weitere sechs Stunden bei 60 °C gerührt.

Anschließend wird dem Produkt Methoxypropylacetat zugegeben und das enthaltene Tetrahydrofuran abdestilliert, der Anteil nichtflüchtiger Anteile(2,0 $\pm$ 0,1 g Prüfsubstanz, Doppelbestimmung, 10 Minuten, 150 °C; EN ISO 3251) von 40 % eingestellt.

**Herstellung von (a2.3)**

Vorstufe A

100 g Dimethylolpropionsäure (Fa. Perstorp), 255,26 g $\varepsilon$-Caprolacton und 74,64 g $\delta$-Valerolacton wurden mit Dibutylzinndilaurat (200 ppm) versetzt und unter Schutzgas so lange bei 170 °C gerührt, bis der Anteil nichtflüchtiger Anteile (2,0 $\pm$ 0,1 g Prüfsubstanz, Doppelbestimmung, 10 Minuten, 150 °C; EN ISO 3251) einen Wert von 98 % überschritt.

Vorstufe B

435 g Desmodur T100 (Fa. Bayer) wird unter Stickstoff vorgelegt und 1100 g des trockenen (Wassergehalt nach Karl Fischer < 0,1 %) Polyethers (Butanol-gestarteter PO-Polyether, Mw ca. 1100 Da) wird langsam zugetropft, so dass die Reaktionstemperatur 60 °C nicht überschreitet. Nach beendeter Zugabe wird so lange bei 60 °C nachgerührt, bis die NCO-Zahl des Produktes sich über einen Zeitraum von 30 Minuten nicht signifikant ändert.

Anschließend wird der verbliebene Überschusses an Desmodur T100 destillativ durch den Einsatz eines Dünnschicht- oder Kurzwegverdampfers entfernt.

Synthese der Verbindung aus den Vorstufen A und B

1,2 g Epomin SP200 (Fa. Nippon Shokubai) werden zusammen mit 59,0 g Vorstufe A unter Stickstoff auf 180 °C erhitzt. Der Ansatz wurde bei dieser Temperatur gerührt, bis die Säurezahl (SZ gemäß DIN 53402) einen Wert von 8,4 mg KOH /g Substanz erreichte. Während der Umsetzung wurde das entstehende Reaktionswasser bei der gewählten Reaktionstemperatur abdestilliert und in einem Wasserabscheider aufgefangen. Anschließend wurde die Hydroxylzahl (gemäß DIN / ISO 4629) des resultierenden Produktes bestimmt und 50 % der Hydroxygruppen bei einer Temperatur von 60 °C durch Zugabe der Vorstufe B und vierstündiges Rühren unter Stickstoff umgesetzt.

Das Produkt wird als hochviskoses, braunes Öl erhalten, die Wirksubstanzkonzentration beträgt 100 %.

**Herstellung von (a2.4)**

Vorstufe A

100 g Dimethylolpropionsäure (Fa. Perstorp), 255,26 g $\varepsilon$-Caprolacton und 74,64 g$\delta$-Valerolacton wurden mit Dibutylzinndilaurat (200 ppm) versetzt und unter Schutzgas so lange bei 170 °C gerührt, bis der Anteil nichtflüchtiger Anteile (2,0 $\pm$ 0,1 g Prüfsubstanz, Doppelbestimmung, 10 Minuten, 150 °C; EN ISO 3251) einen Wert von 98 % überschritt.

Vorstufe B

435 g Desmodur T100 (Fa. Bayer) wird unter Stickstoff vorgelegt und 1100 g des trockenen (Wassergehalt nach Karl Fischer < 0,1 %) Polyethers (Butanol-gestarteter PO-Polyether, Mw ca. 1100 Da) wird langsam zugetropft, so dass die Reaktionstemperatur 60 °C nicht überschreitet. Nach beendeter Zugabe wird so lange bei 60 °C nachgerührt, bis die NCO-Zahl des Produktes sich über einen Zeitraum von 30 Minuten nicht signifikant ändert.
Anschließend wird der verbliebene Überschusses an Desmodur T100 destillativ durch den Einsatz eines Dünnschicht- oder Kurzwegverdampfers entfernt.

Synthese der Verbindung aus den Vorstufen A und B

1,2 g Epomin SP200 (Fa. Nippon Shokubai) werden zusammen mit 59,0 g Vorstufe A unter Stickstoff auf 180 °C erhitzt. Der Ansatz wurde bei dieser Temperatur gerührt, bis die Säurezahl (SZ gemäß DIN 53402) einen Wert von 7,8 mg KOH /g Substanz erreichte. Während der Umsetzung wurde das entstehende Reaktionswasser bei der gewählten Reaktionstemperatur abdestilliert und in einem Wasserabscheider aufgefangen. Anschließend wurde die Hydroxylzahl (gemäß DIN / ISO 4629) des resultierenden Produktes bestimmt und 50 % der Hydroxygruppen bei einer Temperatur von 60 °C durch Zugabe der Vorstufe B und vierstündiges Rühren unter Stickstoff umgesetzt.
Anschließend wird das erhaltene Produkt zur weiteren Verwendung 80 %-ig in Methoxypropylacetat angelöst.

**Herstellung von (a2.5)**

Vorstufe A

134 g Dimethylolpropionsäure (Fa. Perstorp), 342 g ε-Caprolacton und 100 g δ-Valerolacton wurden mit Dibutylzinndilaurat (200 ppm) versetzt und unter Schutzgas so lange bei 170 °C gerührt, bis der Anteil nichtflüchtiger Anteile (2,0 $\pm$ 0,1 g Prüfsubstanz, Doppelbestimmung, 10 Minuten, 150 °C; EN ISO 3251) einen Wert von 98 % überschritt.

Vorstufe B

435 g Desmodur T100 (Fa. Bayer) wird unter Stickstoff vorgelegt und 1100 g des trockenen (Wassergehalt nach Karl Fischer < 0,1 %) Polyethers (Butanol-gestarteter PO-Polyether, Mw ca. 1100 Da) wird langsam zugetropft, so dass die Reaktionstemperatur 60 °C nicht überschreitet. Nach beendeter Zugabe wird so lange bei 60 °C nachgerührt, bis die NCO-Zahl des Produktes sich über einen Zeitraum von 30 Minuten nicht signifikant ändert.
Anschließend wird der verbliebene Überschusses an Desmodur T100 destillativ durch den Einsatz eines Dünnschicht- oder Kurzwegverdampfers entfernt.

Synthese der Verbindung aus den Vorstufen A und B

10 g Epomin SP006 (Fa. Nippon Shokubai) werden zusammen mit 550 g Vorstufe A unter Stickstoff auf 180 °C erhitzt. Der Ansatz wurde bei dieser Temperatur gerührt, bis die Säurezahl (SZ gemäß DIN 53402) einen Wert von 10,3 mg KOH /g Substanz erreichte. Während der Umsetzung wurde das entstehende Reaktionswasser bei der gewählten Reaktionstemperatur abdestilliert und in einem Wasserabscheider aufgefangen. Anschließend wurde die Hydroxylzahl (gemäß DIN / ISO 4629) des resultierenden Produktes bestimmt und 50 % der Hydroxygruppen bei einer Temperatur von 60 °C durch Zugabe der Vorstufe B und vierstündiges Rühren unter Stickstoff umgesetzt.
Anschließend wird das erhaltene Produkt zur weiteren Verwendung 80 %-ig in Benzylalkohol angelöst.

**Herstellung von (a2.6)**

250 g Polyether (Methanolgestarteter EO-Polyether, Mw ca. 500 Da) werden mit 181 g ε-Caprolacton versetzt und auf 80 °C erhitzt. Anschließend werden 1000 ppm Toluolsulfonsäure zugegeben. Die Reaktionsmischung rührt so lange, bis der Anteil nichtflüchtiger Anteile (2,0 $\pm$ 0,1 g Prüfsubstanz, Doppelbestimmung, 10 Minuten, 150 °C; EN ISO 3251) einen Wert von 98 % überschreitet. Anschließend werden 650 ppm Dibutylethanolamin zugegeben und die Reaktionsmischung rührt weitere 10 Minuten.
51 g Polyphosphorsäure werden zudosiert. Die Reaktionsmischung rührt drei Stunden, bis die Säurezahl (Säurezahl gemäß DIN EN ISO 2114) im Kolben nicht weiter ansteigt. Anschließend werden 5 g Wasser, 900 g Methoxypropylacetat und 19 g Magnesiumoxid zugegeben und die Reaktionsmischung wird für eine Stunde bei 100 °C homogenisiert. Überschüssiges Wasser wird im Vakuum entfernt, bis der Wassergehalt nach Karl-Fischer (gemäß DIN 51777) einen Wert < 0,2 % erreicht.

Anschließend wird der Wirksubstanzgehalt durch Bestimmung des Anteils nichtflüchtiger Anteile (2,0 ± 0,1 g Prüfsubstanz, Doppelbestimmung, 10 Minuten, 150 °C; EN ISO 3251) auf einen Wert von 40 % eingestellt.

**Herstellung von (a2.7)**

30 g Epomin SP-018 (Fa. Nippon Shokubai) werden auf 80 °C erhitzt. Über einen Zeitraum von zwei Stunden werden 70 g 2-Ethylhexylacrylat zugetropft, anschließend wird sechs Stunden nachreagieren gelassen.
Das erhaltene Produkt weist eine Wirksubstanzkonzentration von 100 % auf.

**Herstellung von (a2.8)**

65 g Kunstharz SMA 2000 (Styrol-Maleinsäureanhydrid-Copolymer, 187 mmol Anhydridgruppen, Fa. Cray Valley) werden in 100 g Methoxypropylacetat angelöst und langsam mit einer Mischung aus 105 g Jeffamin M2070 (aminterminierter EO/PO-Polyether, Fa. Huntsman) und 10,2 g N,N-Dimethylaminopropylamin versetzt und für vier Stunden auf 170 °C erhitzt. Hierbei wird das enthaltene Methoxypropylacetat abdestilliert. Anschließend werden 8,9 g Benzylchlorid bei 70 °C zugegeben und acht Stunden zur Reaktion gebracht.
Das erhaltene Produkt wird mit einer Mischung aus Methoxypropylacetat und Butylglykol (Verhältnis 1:1, gew.) versetzt, bis der Wirksubstanzgehalt 40 % beträgt.

**Herstellung von (a2.9)**

65 g Kunstharz SMA 2000 (Styrol-Maleinsäureanhydrid-Copolymer, 187 mmol Anhydridgruppen, Fa. Cray Valley) werden in 100 g Methoxypropylacetat angelöst und langsam mit einer Mischung aus 105 g Jeffamin M2070 (aminterminierter EO/PO-Polyether, Fa. Huntsman) und 10,2 g N,N-Dimethylaminopropylamin versetzt und für vier Stunden auf 170 °C erhitzt. Hierbei wird das enthaltene Methoxypropylacetat abdestilliert.
Das erhaltene Produkt wird mit einer Mischung aus Methoxypropylacetat und Butylglykol (Verhältnis 1:1, gew.) versetzt, bis der Wirksubstanzgehalt 40 % beträgt.

**Herstellung von (a2.10)**

Vorstufe A

In einem Reaktionsgefäß werden 205 g Tetrahydrofuran vorgelgt und 0,11 mL1M Tetrabutylammonium-3-chlorobenzoat in Acetonitril und 1,94 g 1-Methoxy-1-trimethylsiloxy-2-methylpropan zugegeben. Das Reaktionsgefäß wurde auf -10 °C gekühlt. Parallel zu einer Zugabe über 40 Minuten einer Mischung bestehend aus 39,6 g 2-Ethylhexylmethacrylat, 20 g Methylmethacrylat und 2,84 g Butylmethacrylat wurde über einen Zeitraum von einer Stunde eine Anlösung von 0,22 mL1M Tetrabutylammonium-3-chlorobenzoat in Acetonitril in 5 mL Tetrahydrofuran zugeführt. Die Reaktionstemperatur überstieg zu keinem Zeitpunkt die Temperatur von 25 °C.
Anschließend wurden 20,9 g N,N-Dimethylaminoethylmethacrylat über einen Zeitraum von 10 Minuten zugetropft, parallel werden weitere 0,11 mL1M Tetrabutylammonium-3-chlorobenzoat in Acetonitril über einen Zeitraum von 10 Minuten zudosiert.
Nach weiteren drei Stunden Rühren bei Raumtemperatur (23°C) wurden 5 mL Methanol zugegeben.

Vorstufe B

87g Polyether (Butanol-gestarteter PO-Polyether, Mw ca. 700 Da) wird auf 60 °C erhitzt. 13 g Polyphosphorsäure werden langsam zugetropft. Die Reaktionsmischung rührt sechs Stunden, bis die Säurezahl (Säurezahl gemäß DIN EN ISO 2114) im Kolben nicht weiter ansteigt.

Synthese der Verbindung aus den Vorstufen A und B

120 g Vorstufe A werden mit 50 g Polyether (Methanolgestarteter EO-Polyether, Mw ca. 350) versetzt und das enthaltene Lösemittel wird im Vakuum abdestilliert. Anschließend wird auf 60 °C erhitzt und 14 g der Vorstufe B werden zugegeben und acht Stunden bei dieser Temperatur gerührt.
Das erhaltene Produkt weist eine Wirksubstanzkonzentration von 50 % auf.

**Herstellung von (a2.11)**

15,2 g alpha-Methystyrol-Dimer werden in 120 g Methoxypropylacetat vorgelegt und auf 120 °C erhitzt. 100 g Dimethylaminoethylmethacrylat und 1,5 g AIBN gelöst in 10 g Methoxypropylacetat werden parallel über einen Zeitraum von 60 Minuten dosiert, anschließend wird 30 Minuten nachreagieren gelassen.

Nun wird eine Mischung aus 60 g Methylmethacrylat, 20 g 2-Ethylhexylmethacrylat, 50 g 2-Ethylhexylacrylat und 230 g Butylacrylat parallel zu einer Lösung von 37,2 g AIBN in 240 g Methoxypropylacetat über einen Zeitraum von 150 Minuten dosiert, anschließend wird 30 Minuten nachreagieren gelassen.

Anschließend werden 100 g Dimethylaminoethylmethacrylat und parallel 1,2 g AIBN gelöst in 10 g Methoxypropylacetat über einen Zeitraum von 60 Minuten dosiert, anschließend wird 30 Minuten nachreagieren gelassen.

Nach weiterer Dosierung von 0,4 g AIBN gelöst in 5 g Methoxypropylacetat über einen Zeitraum von 15 Minuten wird anschließend 60 Minuten nachreagieren gelassen.

Das erhaltene Produkt weist einen Wirksubstanzgehalt von 60 % auf.

**Herstellung von (a2.12)**

Vorstufe A

15 g Tallölfettsäure (Säurezahl: 186 mg KOH / g Substanz) und 10 g Polyethylenglycol 200 werden zusammen langsam auf 200 °C erhitzt, bis kein sich bildendes Wasser mehr aufgefangen werden kann. Vakuum (beginnend bei Normaldruch, langsame Absenkung auf 60 mbar) wird für 2 Stunden angelegt. Anschließend werden 4 g Maleinsäureanhydrid zugegeben. Bei 200 °C wird für eine Stunde reagieren gelassen.

Vorstufe B

17 g Tallölfettsäure (Säurezahl: 186 mg KOH / g Substanz) und 3,0 g Diethylentriaminwerden zusammen gegeben und vier Stunden auf 170 °C erhitzt. Anfallendes Reaktionswasser wird abdestilliert und es wird für weitere zwei Stunden im Vakuum (60 mbar) gerührt.

Anschließend werden 2 g Wasser zugegeben und 30 Minuten bei 95 °C gerührt, bis der Gehalt an tertiärem Stickstoff (siehe Methodenbeschreibung) nicht mehr nachweisbar ist. Anschließend wird erneut Vakuum (60 mbar) angelegt und überschüssiges Wasser wird abdestilliert, bis der Wassergehalt nach Karl-Fischer (gemäß DIN 51777) einen Wert < 0,4 % erreicht.

Synthese der Verbindung aus den Vorstufen A und B

25 g Vorstufe A und 20 g Vorstufe B werden zusammen mit 45 g Isopar G (hydrierte C10-C12-Isoalkane, < 2 % Aromatengehalt) für eine Stunde bei 80 °C homogen gerührt.

Das erhaltene Produkt weist einen Wirksubstanzgehalt von 50 % auf.

**Herstellung von (a2.13)**

Vorstufe A

88 g Lutensol A011 (Fettalkohol-gestarteter EO-Polyether der Fa. BASF SE) werden mit 0,05 g Kaliumcarbonat versetzt und auf 100 °C erhitzt. Anschließend werden 12 g Maleinsäureanhydrid zugegeben und drei Stunden bei dieser Temperatur gerührt.

Vorstufe B

270 g Methoxypropylacetat und 18 g Alpha Methylstyrol werden auf 120 °C erwärmt. Parallel werden 300 g Butylmethacrylat und eine Lösung von 7,2 g AIBN in 40,8 g Methoxypropylacetat über einen Zeitraum von zwei Stunden zudosiert. Nach 30 Minuten Nachreaktionszeit werden parallel 163 g N,N-Dimethylaminoethylmethacrylat und eine Lösung von 1,43 g AIBN in 8,2 g Methoxypropylacetat über einen Zeitraum von einer Stunde zudosiert. Nach 30 Minuten Nachreaktionszeit wird eine Lösung von 1,4 g AIBN in 8 g Methoxypropylacetat über einen Zeitraum von 15 Minuten zudosiert und eine weitere Stunde gerührt.

Synthese der Verbindung aus den Vorstufen A und B

40 g Vorstufe B, 20 g Vorstufe A und 13,3 g Methoxypropylacetat werden zusammen fünf Stunden bei 120 °C gerührt.

Das erhaltene Produkt weist einen Wirksubstanzgehalt von 60 % auf.

**Herstellung von (a2.14)**

Vorstufe A

100 g Dimethylolpropionsäure (Fa. Perstorp), 255,26 g $\varepsilon$-Caprolacton und 74,64 g $\delta$-Valerolacton wurden mit Dibutylzinndilaurat (200 ppm) versetzt und unter Schutzgas so lange bei 170 °C gerührt, bis der Anteil nichtflüchtiger Anteile (2,0 ± 0,1 g Prüfsubstanz, Doppelbestimmung, 10 Minuten, 150 °C; EN ISO 3251) einen Wert von 98 % überschritt.

Vorstufe B

435 g Desmodur T100 (Fa. Bayer) wird unter Stickstoff vorgelegt und 1100 g des trockenen (Wassergehalt nach Karl Fischer < 0,1 %) Polyethers (Butanol-gestarteter PO-Polyether, Mw ca. 1100 Da) wird langsam zugetropft, so dass die Reaktionstemperatur 60 °C nicht überschreitet. Nach beendeter Zugabe wird so lange bei 60 °C nachgerührt, bis die NCO-Zahl des Produktes sich über einen Zeitraum von 30 Minuten nicht signifikant ändert.

Anschließend wird der verbliebene Überschusses an Desmodur T100 destillativ durch den Einsatz eines Dünnschicht- oder Kurzwegverdampfers entfernt.

Synthese der Verbindung aus den Vorstufen A und B

1,2 g Epomin SP200 (Fa. Nippon Shokubai) werden zusammen mit 59,0 g Vorstufe A unter Stickstoff auf 180 °C erhitzt. Der Ansatz wurde bei dieser Temperatur gerührt, bis die Säurezahl (SZ gemäß DIN 53402) einen Wert von 9,6 mg KOH /g Substanz erreichte. Während der Umsetzung wurde das entstehende Reaktionswasser bei der gewählten Reaktionstemperatur abdestilliert und in einem Wasserabscheider aufgefangen. Anschließend wurde die Hydroxylzahl (gemäß DIN / ISO 4629) des resultierenden Produktes bestimmt und 50 % der Hydroxygruppen bei einer Temperatur von 60 °C durch Zugabe der Vorstufe B und vierstündiges Rühren unter Stickstoff umgesetzt. Anschließend wird das erhaltene Produkt zur weiteren Verwendung 80 %-ig in Benzylalkohol angelöst.

**Komponente (b1)**

**Herstellung von (b1.1)**

881 g eines Gemisches polymerisierter Fettsäuren mit einem Anteil von > 75 Gew.-% an trimerisierter Fettsäure, jeweils bezogen auf das Gesamtgewicht des Gemisches, mit einer Säurezahl von 191 mg KOH / g Substanz (Pripol 1040, Fa. Croda) werden mit 438 g Triethylentetramin (CAS-Nr.: 112-24-3) und 400 mL Solvent Naphtha (aromatische Kohlenwasserstoff-Fraktion, Siedebereich von 150 °C bis 210 °C) versetzt und auf 150 °C erhitzt, bis der auftretende Destillatstrom deutlich nachlässt. Anschließend wird für 6 Stunden auf 190 °C erhitzt und Vakuum (ca. 500 mbar) angelegt, bist insgesamt 108 g Wasser abgeschieden ist.

Das erhaltene Produkt wird mit Benzylalkohol versetzt, bis ein Anteil nichtflüchtiger Anteile (2,0 ± 0,1 g Prüfsubstanz, Doppelbestimmung, 20 Minuten, 150 °C; EN ISO 3251) von 70 - 75 Gew.-% erhalten wird.

**Herstellung von (b1.2)**

400 g Lupasol P (Polyethylenimin der Fa. BASF SE, 50 %-ig) werden mit 600 g Benzylalkohol versetzt und anschließend destillativ bei 100 °C und Vakuum (langsames Absenken des Druckes von Normaldruck bis auf 30 mbar) vom Wasser befreit, bis kein Destillat mehr anfällt. Anschließend werden unter Schutzgasatmosphäre 200 g Tallölfettsäure (Säurezahl: 186 mg KOH / g Substanz) zugegeben und bei 140 °C für drei Stunden zur Reaktion gebracht.

Es wird ein hellgelbes Produkt mit einem Wirksubstanzgehalt von 40 % erhalten

**Herstellung von (b1.3)**

Gemäß Patentschrift DE3706860A1, wird das dort erwähnte Beispiel 8 synthetisiert. Abweichend zu der dortigen Vorschrift wird nicht 50 %-ig in Cyclohexanon angelöst, sondern 50 %-ig in Solvent Naphtha (aromatische Kohlenwasserstoff-Fraktion, Siedebereich von 150 °C bis 210 °C).

**Herstellung von (b1.4)**

800 g Lupasol P (Polyethylenimin der Fa. BASF SE, 50 %-ig) werden mit 400 g Benzylalkohol versetzt und anschließend destillativ bei 100 °C und Vakuum (langsames Absenken des Druckes von Normaldruck bis auf 30 mbar) vom Wasser befreit, bis kein Destillat mehr anfällt. Anschließend werden unter Schutzgasatmosphäre 200 g Tallölfettsäure (Säurezahl: 186 mg KOH / g Substanz) zugegeben und bei 140 °C für drei Stunden zur Reaktion gebracht.
Es wird ein hellgelbes Produkt mit einem Wirksubstanzgehalt von 60 % erhalten

**Herstellung von (b1.5)**

600 g Lupasol P (Polyethylenimin der Fa. BASF SE, 50 %-ig) werden mit 300 g Benzylalkohol versetzt und anschließend destillativ bei 100 °C und Vakuum (langsames Absenken des Druckes von Normaldruck bis auf 30 mbar) vom Wasser befreit, bis kein Destillat mehr anfällt. Anschließend werden unter Schutzgasatmosphäre 120 g Tallölfettsäure (Säurezahl: 186 mg KOH / g Substanz) zugegeben und bei 140 °C für drei Stunden zur Reaktion gebracht.
Es wird ein hellgelbes Produkt mit einem Wirksubstanzgehalt von 58 % erhalten

**Folgende Komponenten (b1.x) sind käuflich erhältlich:**

**Komponente (b1.6)**

Lupasol P, Polyethylenimin der BASF SE, Mw ca. 750.000 Da (Wirksubstanzgehalt: 50 Gew.-%)

**Komponente (b1.7)**

Tween 20, Polyoxyethylen(20)-sorbitan-monolaurat

**Komponente (b1.8)**

Triethylentetramin

**Komponente (b1.9)**

Isophorondiamin, Isomerengemisch

**Komponente (b1.10)**

Diglycolamin

**Komponente (b1.11)**

Jeffamine T-403, Polyetheramin der Fa. Huntsman

**ANWENDUNGSBEISPIELE**

Im Folgenden wird die Herstellung erfindungsgemäßer Zweikomponenten-Systeme beschrieben, die aus jeweils zwei Stammkomponenten durch Vermischen - wie unten angegeben - erhalten werden. Soweit nicht anderes angegeben wird werden sowohl die Handelsprodukte als auch die anorganischen Verdicker (a1.x), die Netz- und Dispergiermittel (a2.x) sowie die Komponenten (b1.x) so eingesetzt wie diese als Handelsprodukt oder Syntheseprodukt vorliegen. Die Mengenangaben (in g) beziehen sich daher auf die jeweiligen Handels- und Syntheseprodukte inklusive etwaig vorhandener Lösemittel und/oder produktionsbedingt vorhandener nicht entfernter Hilfsstoffe.

Liste der in den Anwendungsbeispielen eingesetzten Handelsprodukte

| Palatal P 4: | Ungesättigtes Polyesterharz basierend auf Orthophthalsäure und Standardglykolen, in Styrol gelöst. Firma DSM. |
|---|---|
| Palatal A 400: | Ungesättigtes Polyesterharz basierend auf Isophthalsäure und Standardglykolen, in Styrol gelöst. Firma DSM. |
| Palatal A 410: | Ungesättigtes Polyesterharz basierend auf Isophtalsäure und Neopentylglykol, in Styrol gelöst. Firma DSM. |
| COR 61-219-655: | Ungesättigtes Polyesterharz basierend auf DCPD, in Styrol gelöst. Firma Interplastic. |
| MEKP Butanox$^R$ M 50: | Härtungsmittel auf Basis Methyl Ethyl Keton Peroxid (MEKP), gelöst in Dimethylphthalat, Firma Akzo Nobel. |
| Beschleuniger NL-51P: | Beschleuniger auf Basis Kobalt(II) 2-Ethylhexanoat, 6% Co, in flüssiger Mischung, Firma Akzo Nobel. |
| Beschleuniger NL-49P: | Beschleuniger auf Basis Kobalt(II) 2-Ethylhexanoat, 1% Co, in flüssiger Mischung, Firma Akzo Nobel. |
| BYK®-A 555: | Polymerhaltiger Entlüfter der Firma BYK-Chemie GmbH. |
| Apyral 1E: | Mineralisches Flammschutzmittel der Firma Nabaltec AG |
| $TiO_2$-Paste (50 Gew.-%$TiO_2$): | 50 % $TiO_2$ (RKB2 der Firma Tronox) in Palatal A400 (Anreibebedingungen: Dissolver, 20 Minuten, 5000 Upm) |

**Systeme mit ungesättigten Polyestern**

Herstellung der jeweiligen Stammkomponente SK.PA, SK.PC, SK.PE, SK.PG, SK.PI und SK.PK

Die einzelnen Bestandteile der Stammkomponenten SK.PA, SK.PC, SK.PE, SK.PG, SK.PI und SK.PK werden in den in Tabellen 1 bis 15 angegebenen Mengen unter Rühren bei Raumtemperatur (23 °C) mit dem Dissolver Pendraulik TD 100 mit einer Zahnscheibe bei 2 bis 5 m/s gemischt und anschließend zur Homogenisierung noch 1 Minute bei 5 m/s, 1 Minute bei 10 m/s, 1 Minute bei 15 m/s gerührt. Die Viskosität dieser Systeme wird anschließend bei Raumtemperatur (23 °C) gemessen.

Darstellung der Halbfabrikate durch Kombination der Stammkomponenten SK.PA und SK.PB, SK.PC und SK.PD, SK.PE und SK.PF, SK.PG und SK.PH, SK.PI und SK.PJ, sowie SK.PK und SK.PL

Die Stammkomponenten SK.PB, SK.PD, SK.PF, SK.PH, SK.PJ, sowie SK.PL werden zu den jeweils zugehörigen Stammkomponenten SK.PA, SK.PC, SK.PE, SK.PG, SK.PI bzw. SK.PK gegeben und mit dem Dissolver Pendraulik TD 100 mit einer Zahnscheibe bei 5 m/s für 1 Minute homogenisiert. Die Viskosität wird nach 2 Minuten gemessen.

**Tabelle 1** (Mengenangaben in g)

| Bestandteile | Vergleichs-Bsp. VP1 | | Vergleichs-Bsp. VP2 | |
|---|---|---|---|---|
| | SK.PA | SK.PB | SK.PA | SK.PB |
| Palatal A400 | 93,56 | | 93,56 | |
| BYK-A 555 | 0,50 | | 0,50 | |
| NL 51 P | 0,99 | | 0,99 | |
| (a1.1) | 4,95 | | 4,95 | |
| (a2.x) | 0,0 | | 0,0 | |
| MEKP Butanox M50 | | 1,0 | | 1,0 |
| (b1.7) | | 0,0 | | 1,0 |

**Tabelle 2** (Mengenangaben in g)

| Bestandteile | Beispiel P1 | | Beispiel P2 | | Beispiel P3 | | Beispiel P4 | | Beispiel P5 | |
|---|---|---|---|---|---|---|---|---|---|---|
| | SK.P A | SK.P B | SK.P A | SK.P B | SK.P A | SK.P B | SK.P A | SK.P B | SK.P A | SK.P B |
| Palatal A 400 | 93,56 | | 93,56 | | 93,56 | | 93,56 | | 93,56 | |
| BYK-A 555 | 0,50 | | 0,50 | | 0,50 | | 0,50 | | 0,50 | |
| NL 51 P | 0,99 | | 0,99 | | 0,99 | | 0,99 | | 0,99 | |
| (a1.1) | 4,95 | | 4,95 | | 4,95 | | 4,95 | | 4,95 | |
| (a2.x) | 3,5[1] | | 3,5[1] | | 3,5[1] | | 3,5[2] | | 3,5[2] | |
| MEKP Butanox M50 | | 1,0 | | 1,0 | | 1,0 | | 1,0 | | 1,0 |
| (b1.x) | | 0,99* | | 2,97** | | 0,99 *** | | 0,99** | | 0,99 **** |

[1] = (a2.1); [2] = (a2.7); * = (b1.7); ** = (b1.3); *** = (b1.1); **** = (b1.2)

**Tabelle 3** (Mengenangaben in g)

| Bestandteile | Beispiel P6 | | Beispiel P7 | | Beispiel P8 | | Beispiel P9 | | Beispiel P10 | |
|---|---|---|---|---|---|---|---|---|---|---|
| | SK.P A | SK.P B | SK.P A | SK.P B | SK.P A | SK.P B | SK.P A | SK.P B | SK.P A | SK.P B |
| Palatal A 400 | 93,56 | | 93,56 | | 93,56 | | 93,56 | | 93,56 | |
| BYK-A 555 | 0,50 | | 0,50 | | 0,50 | | 0,50 | | 0,50 | |
| NL 51 P | 0,99 | | 0,99 | | 0,99 | | 0,99 | | 0,99 | |
| (a1.1) | 4,95 | | 4,95 | | 4,95 | | 4,95 | | 4,95 | |
| (a2.9) | 3,5 | | 3,5 | | 3,5 | | 2,0 | | 2,0 | |
| MEKP Butanox M50 | | 1,0 | | 1,0 | | 1,0 | | 1,0 | | 1,0 |
| (b1.x) | | 0,99* | | 0,99** | | 0,99 *** | | 1,98 *** | | 2,97 *** |

* = (b1.1); ** = (b1.7); *** = (b1.3);

**Tabelle 4** (Mengenangaben in g)

| Bestandteile | Beispiel P11 | | Beispiel P12 | | Beispiel P13 | | Beispiel P14 | | Beispiel P15 | |
|---|---|---|---|---|---|---|---|---|---|---|
| | SK.P C | SK.P D | SK.P C | SK.P D | SK.P C | SK.P D | SK.P C | SK.P D | SK.P C | SK.P D |
| Palatal P4 | 92,65 | | 92,65 | | 92,65 | | 92,65 | | 92,65 | |
| BYK-A 555 | 0,49 | | 0,49 | | 0,49 | | 0,49 | | 0,49 | |
| NL 49 P | 1,96 | | 1,96 | | 1,96 | | 1,96 | | 1,96 | |
| (a1.1) | 4,90 | | 4,90 | | 4,90 | | 4,90 | | 4,90 | |
| (a2.7) | 3,5 | | 3,5 | | 3,5 | | 3,5 | | 3,5 | |
| MEKP Butanox M50 | | 1,5 | | 1,5 | | 1,5 | | 1,5 | | 1,5 |
| (b1.x) | | 0,98* | | 0,98** | | 0,98 *** | | 0,98 **** | | 0,98 ***** |

* = (b1.3); ** = (b1.1); *** = (b1.2); **** = (b1.7); ***** = (b1.10)

**Tabelle 5** (Mengenangaben in g)

| Bestandteile | Beispiel P16 | | Beispiel P17 | | Beispiel P18 | | Beispiel P19 | | Beispiel P20 | |
|---|---|---|---|---|---|---|---|---|---|---|
| | SK.P C | SK.P D | SK.P C | SK.P D | SK.P C | SK.P D | SK.P C | SK.P D | SK.P C | SK.P D |
| Palatal P4 | 92,65 | | 92,65 | | 92,65 | | 92,65 | | 92,65 | |
| BYK-A 555 | 0,49 | | 0,49 | | 0,49 | | 0,49 | | 0,49 | |
| NL 49 P | 1,96 | | 1,96 | | 1,96 | | 1,96 | | 1,96 | |
| (a1.1) | 4,90 | | 4,90 | | 4,90 | | 4,90 | | 4,90 | |
| (a2.1) | 3,5 | | 3,5 | | 3,5 | | 3,5 | | 3,5 | |
| MEKP Butanox M50 | | 1,5 | | 1,5 | | 1,5 | | 1,5 | | 1,5 |
| (b1.x) | | 1,0* | | 1,0** | | 1,0*** | | 1,0 **** | | 1,0 ***** |
| * = (b1.3); ** = (b1.1); *** = (b1.2); **** = (b1.7); ***** = (b1.10) | | | | | | | | | | |

**Tabelle 6** (Mengenangaben in g)

| Bestandteile | Beispiel P21 | | Beispiel P22 | | Beispiel P23 | | Beispiel P24 | | Beispiel P25 | |
|---|---|---|---|---|---|---|---|---|---|---|
| | SK.P C | SK.P D | SK.P C | SK.P D | SK.P C | SK.P D | SK.P C | SK.P D | SK.P C | SK.P D |
| Palatal P4 | 92,65 | | 92,65 | | 92,65 | | 92,65 | | 92,65 | |
| BYK-A 555 | 0,49 | | 0,49 | | 0,49 | | 0,49 | | 0,49 | |
| NL 49 P | 1,96 | | 1,96 | | 1,96 | | 1,96 | | 1,96 | |
| (a1.1) | 4,90 | | 4,90 | | 4,90 | | 4,90 | | 4,90 | |
| (a2.9) | 3,5 | | 3,5 | | 3,5 | | 3,5 | | 3,5 | |
| MEKP Butanox M50 | | 1,5 | | 1,5 | | 1,5 | | 1,5 | | 1,5 |
| (b1.x) | | 1,0* | | 1,0** | | 1,0*** | | 1,0 **** | | 1,0 ***** |
| * = (b1.3); ** = (b1.1); *** = (b1.2); **** = (b1.7); ***** = (b1.10) | | | | | | | | | | |

**Tabelle 7** (Mengenangaben in g)

| Bestandteile | Beispiel P26 | | Beispiel P27 | |
|---|---|---|---|---|
| | SK.P C | SK.P D | SK.P C | SK.P D |
| Palatal P4 | 92,65 | | 92,65 | |
| BYK-A 555 | 0,49 | | 0,49 | |
| NL 49 P | 1,96 | | 1,96 | |
| (a1.1) | 4,90 | | 4,90 | |
| (a2.9) | 3,5 | | 3,5 | |
| MEKP Butanox M50 | | 1,5 | | 1,5 |
| (b1.3) | | 1,96 | | 2,94 |

**Tabelle 8** (Mengenangaben in g)

| Bestandteile | Beispiel P28 | | Beispiel P29 | | Beispiel P30 | |
|---|---|---|---|---|---|---|
| | SK.PE | SK.PF | SK.PE | SK.PF | SK.PE | SK.PF |
| Palatal A410 | 95,45 | | 95,45 | | 95,45 | |
| BYK-A 555 | 0,50 | | 0,50 | | 0,50 | |
| NL 51 P | 0,99 | | 0,99 | | 0,99 | |
| (a1.2) | 2,97 | | 2,97 | | 2,97 | |
| (a2.1) | 2,97 | | 0,59 | | 0,59 | |
| MEKP Butanox M50 | | 1,0 | | 1,0 | | 1,0 |
| (b1.3) | | 0,59 | | 1,19 | | 1,78 |

**Tabelle 9** (Mengenangaben in g)

| Bestandteile | Beispiel P31 | | Beispiel P32 | | Beispiel P33 | |
|---|---|---|---|---|---|---|
| | SK.PE | SK.PF | SK.PE | SK.PF | SK.PE | SK.PF |
| Palatal A410 | 95,45 | | 95,45 | | 95,45 | |
| BYK-A 555 | 0,50 | | 0,50 | | 0,50 | |
| NL 51 P | 0,99 | | 0,99 | | 0,99 | |
| (a1.2) | 2,97 | | 2,97 | | 2,97 | |
| (a2.x) | 2.97[1] | | 2,97[2] | | 2,97[3] | |
| MEKP Butanox M50 | | 1,0 | | 1,0 | | 1,0 |
| (b1.1) | | 0,59 | | 0,59 | | 0,59 |
| [1] = (a2.7); [2] = (a2.1); [3] = (a2.9); | | | | | | |

**Tabelle 10** (Mengenangaben in g)

| Bestandteile | Beispiel P34 | | Beispiel P35 | | Beispiel P36 | | Beispiel P37 | | Beispiel P38 | |
|---|---|---|---|---|---|---|---|---|---|---|
| | SK.P E | SK.P F | SK.P E | SK.P F | SK.P E | SK.P F | SK.P E | SK.P F | SK.P E | SK.P F |
| Palatal A410 | 95,45 | | 95,45 | | 95,45 | | 95,45 | | 95,45 | |
| BYK-A 555 | 0,50 | | 0,50 | | 0,50 | | 0,50 | | 0,50 | |
| NL 51 P | 0,99 | | 0,99 | | 0,99 | | 0,99 | | 0,99 | |
| (a1.1) | 2,97 | | 2,97 | | 2,97 | | 2,97 | | 2,97 | |
| (a2.x) | 2.97[1] | | 2,97[2] | | 2,97[2] | | 0,59[3] | | 0,59[3] | |
| MEKP Butanox M50 | | 1,0 | | 1,0 | | 1,0 | | 1,0 | | 1,0 |
| (b1.x) | | 0,59* | | 0,59* | | 0,59** | | 1,19 *** | | 2,38 *** |
| [1] = (a2.7); [2] = (a2.9); [3] = (a2.1); * = (b1.10); ** = (b1.2); *** = (b1.4) | | | | | | | | | | |

**Tabelle 11** (Mengenangaben in g)

| Bestandteile | Beispiel P39 | | Beispiel P40 | |
|---|---|---|---|---|
| | SK.PG | SK.PH | SK.PG | SK.PH |
| Palatal A400 | 79,75 | | 79,75 | |
| $TiO_2$-Paste (50 Gew.-% $TiO_2$ in Palatal A400) | 10,00 | | 10,00 | |
| NL 49 P | 1,00 | | 1,00 | |
| Styren | 8,00 | | 8,00 | |
| (a1.1) | 1,25 | | 1,25 | |
| (a2.7) | 0,88 | | 0,88 | |
| MEKP Butanox M50 | | 1,0 | | 1,0 |
| (b1.x) | | 0,5* | | 0,5** |
| * = (b1.1); ** = (b1.2) | | | | |

**Tabelle 12** (Mengenangaben in g)

| Bestandteile | Beispiel P41 | | Beispiel P42 | | Beispiel P43 | |
|---|---|---|---|---|---|---|
| | SK.PG | SK.PH | SK.PG | SK.PH | SK.PG | SK.PH |
| Palatal A400 | 79,75 | | 79,75 | | 79,75 | |
| $TiO_2$-Paste (50 Gew.-% $TiO_2$ in Palatal A400) | 10,00 | | 10,00 | | 10,00 | |
| NL 49 P | 1,00 | | 1,00 | | 1,00 | |
| Styren | 8,00 | | 8,00 | | 8,00 | |
| (a1.1) | 1,25 | | 1,25 | | 1,25 | |
| (a2.1) | 0,88 | | 0,88 | | 0,88 | |
| MEKP Butanox M50 | | 1,0 | | 1,0 | | 1,0 |
| (b1.x) | | 0,25* | | 0,25** | | 0,25*** |
| * = (b1.3); ** = (b1.1); *** = (b1.2) | | | | | | |

**Tabelle 13** (Mengenangaben in g)

| Bestandteile | Beispiel P44 | | Beispiel P45 | | Beispiel P46 | |
|---|---|---|---|---|---|---|
| | SK.PG | SK.PH | SK.PG | SK.PH | SK.PG | SK.PH |
| Palatal A400 | 79,75 | | 79,75 | | 79,75 | |
| $TiO_2$-Paste (50 Gew.-% $TiO_2$ in Palatal A400 | 10,00 | | 10,00 | | 10,00 | |
| NL 49 P | 1,00 | | 1,00 | | 1,00 | |
| Styren | 8,00 | | 8,00 | | 8,00 | |
| (a1.1) | 1,25 | | 1,25 | | 1,25 | |
| (a2.9) | 0,50 | | 0,50 | | 0,50 | |
| MEKP Butanox M50 | | 1,0 | | 1,0 | | 1,0 |
| (b1.3) | | 0,25 | | 0,50 | | 0,75 |

**Tabelle 14** (Mengenangaben in g)

| Bestandteile | Beispiel P47 | | Beispiel P48 | |
|---|---|---|---|---|
| | SK.PI | SK.PJ | SK.PI | SK.PJ |
| COR 61-219-655 | 93,56 | | 93,56 | |
| Byk-A 555 | 0,50 | | 0,50 | |
| NL 51 P | 0,99 | | 0,99 | |
| (a1.1) | 4,95 | | 4,95 | |
| (a2.8) | 2,48 | | 2,48 | |
| MEKP Butanox M50 | | 1,0 | | 1,0 |
| (b1.3) | | 0,99 | | 1,98 |

**Tabelle 15** (Mengenangaben in g)

| Bestandteile | Beispiel P49 | | Beispiel P50 | |
|---|---|---|---|---|
| | SK.PK | SK.PL | SK.PK | SK.PL |
| Palatal P4 | 59,31 | | 59,31 | |
| Byk-A 555 | 0,50 | | 0,50 | |
| NL 51 P | 0,99 | | 0,99 | |
| Apyral 1E | 29,70 | | 29,70 | |
| Styren | 8,14 | | 8,14 | |
| (a1.5) | 1,36 | | 1,36 | |
| (a2.6) | 0,95 | | 0,95 | |
| MEKP Butanox M50 | | 1,0 | | 1,0 |
| (b1.3) | | 0,82 | | 0,27 |

**Tabelle 16**

| Vergl.-beispiel | Viskosität* SK.PA ohne (a2.x) | Viskosität* SK.PA | Viskositätsverlust in % | Viskosität* SK.PB | Viskosität* SK.PA + SK.PB | Viskositätssteigerung[1] in % |
|---|---|---|---|---|---|---|
| VP1 | 67,3 | ./. | ./. | ./. | 67,3 | ./. |
| VP2 | 67,3 | ./. | ./. | ./. | 170,2 | ./. |

| Beispiel | Viskosität* SK.PA ohne (a2.x) | Viskosität* SK.PA | Viskositätsverlust in % | Viskosität* SK.PB | Viskosität* SK.PA + SK.PB | Viskositätssteigerung[1] in % |
|---|---|---|---|---|---|---|
| P1 | 67,3 | 27,8 | 59 | 1,2 | 46,1 | 69 |
| P2 | 67,3 | 27,8 | 59 | 1,2 | 63,0 | 127 |
| P3 | 67,3 | 27,8 | 59 | 1,2 | 65,4 | 135 |
| P4 | 67,3 | 15,4 | 77 | 1,2 | 15,8 | 3 |
| P5 | 67,3 | 15,4 | 77 | 1,2 | 18,5 | 20 |
| P6 | 67,3 | 4,0 | 94 | 1,2 | 7,6 | 90 |
| P7 | 67,3 | 4,0 | 94 | 1,2 | 7,1 | 78 |
| P8 | 67,3 | 4,0 | 94 | 1,2 | 29,8 | 645 |
| P9 | 67,3 | 28,2 | 58 | 1,2 | 61,5 | 118 |
| P10 | 67,3 | 28,2 | 58 | 1,2 | 116,3 | 312 |

| Beispiel | Viskosität* SK.PC ohne (a2.x) | Viskosität* SK.PC | Viskositätsverlust in % | Viskosität* SK.PD | Viskosität* SK.PC + SK.PD | Viskositätssteigerung[2] in % |
|---|---|---|---|---|---|---|
| P11 | 54,9 | 5,1 | 91 | 1,2 | 34,0 | 567 |
| P12 | 54,9 | 5,1 | 91 | 1,2 | 9,0 | 76 |
| P13 | 54,9 | 5,1 | 91 | 1,2 | 6,3 | 24 |
| P14 | 54,9 | 5,1 | 91 | 1,2 | 6,0 | 18 |
| P15 | 54,9 | 5,1 | 91 | 1,2 | 9,5 | 86 |
| P16 | 54,9 | 3,3 | 94 | 1,2 | 29,7 | 800 |
| P17 | 54,9 | 3,3 | 94 | 1,2 | 52,3 | 1485 |
| P18 | 54,9 | 3,3 | 94 | 1,2 | 3,9 | 18 |
| P19 | 54,9 | 3,3 | 94 | 1,2 | 3,6 | 9 |
| P20 | 54,9 | 3,3 | 94 | 1,2 | 5,4 | 64 |
| P21 | 54,9 | 7,8 | 86 | 1,2 | 36,0 | 362 |

| Beispiel | Viskosität* SK.PC ohne (a2.x) | Viskosität* SK.PC | Viskositätsverlust in % | Viskosität* SK.PD | Viskosität* SK.PC + SK.PD | Viskositätssteigerung[2] in % |
|---|---|---|---|---|---|---|
| P22 | 54,9 | 7,8 | 86 | 1,2 | 75,4 | 867 |
| P23 | 54,9 | 7,8 | 86 | 1,2 | 105,0 | 1246 |
| P24 | 54,9 | 7,8 | 86 | 1,2 | 29,7 | 281 |
| P25 | 54,9 | 7,8 | 86 | 1,2 | 71,1 | 812 |
| P26 | 54,9 | 7,8 | 86 | 1,2 | 66,6 | 754 |
| P27 | 54,9 | 7,8 | 86 | 1,2 | 95,4 | 1123 |
| Beispiel | Viskosität* SK.PE ohne (a2.x) | Viskosität* SK.PE | Viskositätsverlust in % | Viskosität* SK.PF | Viskosität* SK.PE + SK.PF | Viskositätssteigerung[3] in % |
| P28 | 31,7 | 5,7 | 82 | 1,2 | 10,2 | 79 |
| P29 | 31,7 | 4,4 | 86 | 1,2 | 25,8 | 486 |
| P30 | 31,7 | 4,4 | 86 | 1,2 | 48,0 | 991 |
| P31 | 31,7 | 22,5 | 29 | 1,2 | 25,9 | 15 |
| P32 | 31,7 | 5,7 | 82 | 1,2 | 6,9 | 21 |
| P33 | 31,7 | 4,4 | 86 | 1,2 | 7,5 | 70 |
| P34 | 31,7 | 22,5 | 29 | 1,2 | 23,9 | 6 |
| P35 | 31,7 | 4,4 | 86 | 1,2 | 6,6 | 50 |
| P36 | 31,7 | 4,4 | 86 | 1,2 | 4,6 | 5 |
| P37 | 31,7 | 4,4 | 86 | 1,2 | 17,3 | 293 |
| P38 | 31,7 | 4,4 | 86 | 1,2 | 224,0 | 4991 |
| Beispiel | Viskosität* SK.PG ohne (a2.x) | Viskosität* SK.PG | Viskositätsverlust in % | Viskosität* SK.PH | Viskosität* SK.PG + SK.PH | Viskositätssteigerung[4] in % |
| P39 | 3,1 | 1,2 | 61 | 1,2 | 2,9 | 142 |
| P40 | 3,1 | 1,2 | 61 | 1,2 | 3,0 | 150 |
| P41 | 3,1 | 1,2 | 61 | 1,2 | 2,4 | 100 |
| P42 | 3,1 | 1,2 | 61 | 1,2 | 4,5 | 275 |
| P43 | 3,1 | 1,2 | 61 | 1,2 | 3,0 | 150 |
| P44 | 3,1 | 1,2 | 61 | 1,2 | 1,6 | 33 |

(fortgesetzt)

| Beispiel | Viskosität* SK.PG ohne (a2.x) | Viskosität* SK.PG | Viskositätsverlust in % | Viskosität* SK.PH | Viskosität* SK.PG + SK.PH | Viskositätssteigerung[4] in % |
|---|---|---|---|---|---|---|
| P45 | 3,1 | 1,2 | 61 | 1,2 | 2,2 | 83 |
| P46 | 3,1 | 1,2 | 61 | 1,2 | 2,6 | 117 |
| Beispiel | Viskosität* SK.PI ohne (a2.x) | Viskosität* SK.PI | Viskositätsverlust in % | Viskosität* SK.PJ | Viskosität* SK.PI + SK.PJ | Viskositätssteigerung[5] in % |
| P47 | 344 | 51,4 | 85 | 1,2 | 62,7 | 22 |
| P48 | 344 | 51,4 | 85 | 1,2 | 81,3 | 58 |
| Beispiel | Viskosität* SK.PK ohne (a2.x) | Viskosität* SK.PK | Viskositätsverlust in % | Viskosität* SK.PL | Viskosität* SK.PK + SK.PL | Viskositätssteigerung[6] in % |
| P49 | 3,8 | 2,3** | 39 | 1,2 | 11,0** | 378 |
| P50 | 3,8 | 2,3** | 39 | 1,2 | 11,1** | 383 |

\* in Pascalsekunden; \*\* die Viskosität wurden bei einer Scherrate von 5 $s^{-1}$ gemessen; [1] gegenüber SK.PA; [2] gegenüber SK.PC; [3] gegenüber SK.PE; [4] gegenüber SK.PG ; [5] gegenüber SK.PI; [6] gegenüber SK.PK;

Stammkomponenten SK.PC (mit a2.x) wurde vor der Mischung mit SK.PC für 1 Woche bei Raumtemperatur (23 °C) gelagert

In **Vergleichsbeispiel VP1** wurden die Stammkomponenten SK.PA und SK.PB ohne die Verbindungen (a2) und (b1) hergestellt. Es zeigt sich, dass die Viskosität der thixotropierten Stammkomponente SK.PA sehr hoch ist und die Viskosität bei Zugabe des Härters (Stammkomponente SK.PB) sich bis zur Aushärtung des Systems nicht mehr verändert.

In **Vergleichsbeispiel VP2** wurde die Stammkomponente SK.PA ohne Netz- und Dispergiermittel (a2) und Stammkomponente SK.PB mit 1,0 g des Polymers (b1) (hier: (b1.7)) hergestellt. Es zeigt sich, dass die Viskosität der Stammkomponente SK.PA sehr hoch ist und der Zusatz des Polymers (b1) die Viskosität der Mischung der Stammkomponenten SK.PA und SK.PB noch weiter erhöht.

In den **erfindungsgemäßen Beispielen P1 bis P50** wurden verschiedene Zweikomponenten-Systeme aus den in den Tabellen 2 bis 11 aufgeführten Bestandteilen, in den jeweils in den Tabellen angegebenen Mengen hergestellt.

Generell wird die Viskosität der thixotropierten Stammkomponenten durch die Zugabe der jeweiligen Netz- und Dispergiermittel (a2.x) signifikant reduziert. Dies ermöglicht eine einfache Verarbeitung und auch eine sehr einfache Mischung der Stammkomponenten.

Exemplarisch hervorgehoben seien hier die Beispiele der fünf Reihen P21 bis P25. Durch den Einsatz des Netz- und Dispergieradditives a2.9 wird die Viskosität der Stammkomponente SK.PC signifikant bei allen Beispielen um 86 % reduziert. Die Zugabe der Komponente (b1) führt, in Abhängigkeit der Struktur der viskositätssteigernden Verbindung, zu sehr unterschiedlichen Ergebnissen: Die verhältnismäßig geringste Ausprägung der Viskositätssteigerung erhält man durch den Einsatz von den OH-funktionellen Verbindungen TWEEN 20 (b1.7, hier im Bsp. P24) und b1.3 (Beispiel 21). Der Erfolg dieser Viskositätserhöhungen ist zwar schon beträchtlich, lässt sich jedoch durch den Einsatz von aminhaltigen Verbindungen noch weiter steigern. Der Einsatz der Verbindungen b1.1 (Beispiel P22) und b1.10 (Diglycolamin, Beispiel P25) erhöhen die Viskosität der Mischungen der beiden Stammkomponenten nochmals deutlich, noch höher steigt die Viskosität beim Einsatz der Verbindung b1.2 im Beispiel P23. Diese Ergebnisse sind auf die unterschiedliche Qualität der verdickeroberflächenaffinen Strukturelemente zurückzuführen. Je mehr ideal geeignete funktionelle Gruppen als verdickeroberflächenaffine Strukturelemente vorhanden sind und je idealer, d. h. gleichmäßiger diese über die Struktur der Verbindung b1.x verteilt sind, desto besser ist die Eignung als viskositätssteigernde Verbindung.

## (a1.x)(a2.x)-(b1.x)-Kombinationen ohne ungesättigten Polyesterbestandteil

Im Folgenden wird ein einfacher "Vorab"-Test für die Auswahl potentiell geeigneten (a1.x)(a2.x)-(b1.x)-Kombinationen beschrieben. Für diesen Test werden (a1.x) und (a2.x) in einem Lösemittel vorgelegt und anschließend wird (b1.x) in Reinform oder gelöst eingearbeitet. Der Verdickungseffekt wird anhand der Viskositätssteigerung ermittelt.

### Herstellung der bindemittelfreien Testsysteme

Das Lösemittel (PMA=Methoxypropylacetat, Benzylalkohol, Styren oder Wasser) sowie die anorganischen Verdicker (a1.x) (Mengen siehe Tabellen) werden mit dem Dissolver Pendraulik TD 100 mit einer Zahnscheibe bei 2 m/s gemischt und anschließend zur Homogenisierung noch 1 Minute bei 5 m/s, 1 Minute bei 10 m/s, 1

Minute bei 15 m/s gerührt. Anschließend wird das Netz- und Dispergiermittel (a2.x) (Mengen siehe Tabellen) zugegeben und 1 Minute bei 10 m/s homogenisiert. Nach Abkühlung auf Raumtemperatur (23°C) wird die Viskosität des Systems SK.MA, SK.MC, SK.ME, SK.MG bzw. SK.MI gemessen. Anschließend werden die, die Komponente (b1.x) enthaltenden Komponenten SK.MB, SK.MD, SK.MF, SK.MH bzw. SK.MJ zugegeben. Dann wird 1 Minute bei 5 m/s homogenisiert und die Viskosität nach 2 Minuten gemessen (Viskosität nach Einarbeitung von (b1.x)).

**Tabelle 17** (Mengenangaben in g)

| Bestandteile | Vergleichs-Bsp. M1 | | Vergleichs-Bsp. M2 | |
|---|---|---|---|---|
| | SK.MA | SK.MB | SK.MA | SK.MB |
| PMA | 90,0 | | 90,0 | |
| (a1.1) | 10,0 | | 10,0 | |
| (a2.x) | 0,0 | | 0,0 | |
| Benzylalkohol | | 0,0 | | 0,0 |
| (b1.1) | | 0,0 | | 2,0 |

**Tabelle 18** (Mengenangaben in g)

| Bestandteile | Beispiel M1 | | Beispiel M2 | | Beispiel M3 | | Beispiel M4 | | Beispiel M5 | |
|---|---|---|---|---|---|---|---|---|---|---|
| | SK.M A | SK.M B | SK.M A | SK.M B | SK.M A | SK.M B | SK.M A | SK.M B | SK.M A | SK.M B |
| PMA | 90,0 | | 90,0 | | 90,0 | | 90,0 | | 90,0 | |
| (a1.1) | 10,0 | | 10,0 | | 10,0 | | 10,0 | | 10,0 | |
| (a2.x) | 5,0[1] | | 5,0[1] | | 5,0[2] | | 5,0[2] | | 5,0[2] | |
| Benzyl alkohol | | 0,0 | | 0,0 | | 0,0 | | 98,0 | | 98,0 |
| (b1.x) | | 2,0* | | 1,0** | | 1,0*** | | 2,0* | | 2,0** |
| [1] = (a2.1); [2] = (a2.4); * = (b1.1); ** = (b1.2); *** = (b1.3) | | | | | | | | | | |

**Tabelle 19** (Mengenangaben in g)

| Bestandteile | Beispiel M6 | | Beispiel M7 | |
|---|---|---|---|---|
| | SK.MA | SK.MB | SK.MA | SK.MB |
| PMA | 90,0 | | 90,0 | |
| (a1.1) | 10,0 | | 10,0 | |
| (a2.5) | 5,0 | | 5,0 | |
| Benzylalkohol | | 98,0 | | 98,0 |
| (b1.x) | | 2,0* | | 2,0** |
| * = (b1.1); ** = (b1.2) | | | | |

**Tabelle 20** (Mengenangaben in g)

| Bestandteile | Beispiel M8 | | Beispiel M9 | | Beispiel M10 | |
|---|---|---|---|---|---|---|
| | SK.MC | SK.MD | SK.MC | SK.MD | SK.MC | SK.MD |
| PMA | 87,0 | | 87,0 | | 87,0 | |
| (a1.4) | 13,0 | | 13,0 | | 13,0 | |
| (a2.1) | 5,2 | | 5,2 | | 5,2 | |
| (b1.x) | | 2,6* | | 1,95** | | 1,3*** |
| * = (b1.3); ** = (b1.1); *** = (b1.2) | | | | | | |

**Tabelle 21** (Mengenangaben in g)

| Bestandteile | Beispiel M11 | | Beispiel M12 | | Beispiel M13 | |
|---|---|---|---|---|---|---|
| | SK.MC | SK.MD | SK.MC | SK.MD | SK.MC | SK.MD |
| PMA | 87,0 | | 87,0 | | 87,0 | |
| (a1.4) | 13,0 | | 13,0 | | 13,0 | |
| (a2.4) | 5,2 | | 5,2 | | 5,2 | |
| (b1.x) | | 2,6* | | 1,95** | | 1,3*** |
| * = (b1.3); ** = (b1.1); *** = (b1.2) | | | | | | |

**Table 22**(Mengenangaben in g)

| Bestandteile | Beispiel M14 | | Beispiel M15 | | Beispiel M16 | |
|---|---|---|---|---|---|---|
| | SK.MC | SK.MD | SK.MC | SK.MD | SK.MC | SK.MD |
| PMA | 87,0 | | 87,0 | | 87,0 | |
| (a1.4) | 13,0 | | 13,0 | | 13,0 | |
| (a2.9) | 5,2 | | 5,2 | | 5,2 | |
| (b1.x) | | 2,6* | | 1,95** | | 1,3*** |
| * = (b1.3); ** = (b1.1); *** = (b1.2) | | | | | | |

**Tabelle 23** (Mengenangaben in g)

| Bestandteile | Beispiel M17 | | Beispiel M18 | | Beispiel M19 | |
|---|---|---|---|---|---|---|
| | SK.ME | SK.MF | SK.ME | SK.MF | SK.ME | SK.MF |
| PMA | 85,0 | | 85,0 | | 85,0 | |
| (a1.3) | 15,0 | | 15,0 | | 15,0 | |
| (a2.1) | 6,0 | | 6,0 | | 6,0 | |
| (b1.x) | | 3,0* | | 2,25** | | 1,5*** |
| * = (b1.3); ** = (b1.1); *** = (b1.2) | | | | | | |

**Tabelle 24** (Mengenangaben in g)

| Bestandteile | Beispiel M20 | | Beispiel M21 | | Beispiel M22 | |
|---|---|---|---|---|---|---|
| | SK.ME | SK.MF | SK.ME | SK.MF | SK.ME | SK.MF |
| PMA | 85,0 | | 85,0 | | 85,0 | |
| (a1.3) | 15,0 | | 15,0 | | 15,0 | |
| (a2.3) | 6,0 | | 6,0 | | 6,0 | |
| Benzylalkohol | | 0,0 | | 0,0 | | 98,5 |
| (b1.x) | | 3,0* | | 2,25** | | 1,5*** |
| * = (b1.3); ** = (b1.1); *** = (b1.2) | | | | | | |

**Tabelle 25** (Mengenangaben in g)

| Bestandteile | Beispiel M23 | | Beispiel M24 | | Beispiel M25 | |
|---|---|---|---|---|---|---|
| | SK.ME | SK.MF | SK.ME | SK.MF | SK.ME | SK.MF |
| PMA | 85,0 | | 85,0 | | 85,0 | |
| (a1.3) | 15,0 | | 15,0 | | 15,0 | |
| (a2.8) | 6,0 | | 6,0 | | 6,0 | |
| Benzylalkohol | | 0,0 | | 0,0 | | 98,5 |
| (b1.x) | | 3,0* | | 2,25** | | 1,5*** |
| * = (b1.3); ** = (b1.1); *** = (b1.2) | | | | | | |

**Tabelle 26** (Mengenangaben in g)

| Bestandteile | Beispiel M26 | | Beispiel M27 | | Beispiel M28 | |
|---|---|---|---|---|---|---|
| | SK.MG | SK.MH | SK.MG | SK.MH | SK.MG | SK.MH |
| Styren | 85,0 | | 85,0 | | 85,0 | |
| (a1.5) | 15,0 | | 15,0 | | 15,0 | |
| (a2.12) | 6,0 | | 6,0 | | 6,0 | |
| (b1.x) | | 3,0* | | 3,0** | | 3,0*** |
| * = (b1.3); ** = (b1.7); *** = (b1.10) | | | | | | |

**Tabelle 27**

| Bestandteile | Beispiel M29 | | Beispiel M30 | | Beispiel M31 | |
|---|---|---|---|---|---|---|
| | SK.MG | SK.MH | SK.MG | SK.MH | SK.MG | SK.MH |
| Styren | 85,0 | | 85,0 | | 85,0 | |
| (a1.5) | 15,0 | | 15,0 | | 15,0 | |
| (a2.3) | 6,0 | | 6,0 | | 6,0 | |
| (b1.x) | | 3,0* | | 3,0** | | 3,0*** |
| * = (b1.3); ** = (b1.7); *** = (b1.10) | | | | | | |

**Tabelle 28** (Mengenangaben in g)

| Bestandteile | Beispiel M32 | | Beispiel M33 | | Beispiel M34 | |
|---|---|---|---|---|---|---|
| | SK.MG | SK.MH | SK.MG | SK.MH | SK.MG | SK.MH |
| Styren | 85,0 | | 85,0 | | 85,0 | |
| (a1.5) | 15,0 | | 15,0 | | 15,0 | |
| (a2.9) | 6,0 | | 6,0 | | 6,0 | |
| (b1.x) | | 3,0* | | 3,0** | | 3,0*** |
| * = (b1.3); ** = (b1.7); *** = (b1.10) | | | | | | |

**Tabelle 29** (Mengenangaben in g)

| Bestandteile | Beispiel M35 | | Beispiel M36 | |
|---|---|---|---|---|
| | SK.MI | SK.MJ | SK.MI | SK.MJ |
| Wasser | 85,0 | | 85,0 | |
| (a1.5) | 15,0 | | 15,0 | |
| (a2.1) | 6,0 | | 6,0 | |
| (b1.6) | | 0,75 | | 3,0 |

**Tabelle 30**

| Vergl.beispiel | Viskosität* SK.MA ohne (a2.x) | Viskosität* SK.MA | Viskositätsverlust in % | Viskosität* SK.MB | Viskosität* SK.MA + SK.MB | Viskositätssteigerung[1] in % |
|---|---|---|---|---|---|---|
| VM1 | 16,7 | ./. | ./. | ./. | ./. | ./. |
| VM2 | 16,7 | ./. | ./. | ./: | 54,8 | ./. |
| **Beispiel** | Viskosität* SK.MA ohne (a2.x) | Viskosität* SK.MA | Viskositätsverlust in % | Viskosität* SK.MB | Viskosität* SK.MA + SK.MB | Viskositätssteigerung[1] in % |
| M1 | 16,7 | 0,44 | 97 | 0,3 | 51,0 | 10491 |
| M2 | 16,7 | 0,44 | 97 | 0,3 | 46,4 | 10445 |
| M3 | 16,7 | 0,19 | 99 | 0,3 | 1,8 | 847 |
| M4 | 16,7 | 0,19 | 99 | 0,01 | 8,9 | 4584 |
| M5 | 16,7 | 0,19 | 99 | 0,01 | 31,5 | 16479 |
| M6 | 16,7 | 1,18 | 93 | 0,01 | 30,6 | 2493 |
| M7 | 16,7 | 1,18 | 93 | 0,01 | 29,2 | 2375 |
| **Beispiel** | Viskosität* SK.MC ohne (a2.x) | Viskosität* SK.MC | Viskositätsverlust in % | Viskosität* SK.MD | Viskosität* SK.MC + SK.MD | Viskositätssteigerung[2] in % |
| M8 | 162 | 10,8 | 93 | 0,3 | 98,7 | 814 |
| M9 | 162 | 10,8 | 93 | 0,3 | 184,1 | 1605 |
| M10 | 162 | 10,8 | 93 | 0,3 | 48,1 | 345 |
| M11 | 162 | 15,7 | 90 | 0,3 | 100,7 | 541 |
| M12 | 162 | 15,7 | 90 | 0,3 | 130,5 | 731 |
| M13 | 162 | 15,7 | 90 | 0,3 | 58,1 | 270 |
| M14 | 162 | 35,1 | 78 | 0,3 | 475,6 | 1255 |
| M15 | 162 | 35,1 | 78 | 0,3 | 488,2 | 1291 |
| M16 | 162 | 35,1 | 78 | 0,3 | 108,9 | 210 |
| **Beispiel** | Viskosität* SK.ME ohne (a2.x) | Viskosität* SK.ME | Viskositätsverlust in % | Viskosität* SK.MF | Viskosität* SK.ME + SK.MF | Viskositätssteigerung[3] in % |
| M17 | 15,1 | 6,7 | 96 | 0,3 | 45,0 | 572 |
| M18 | 15,1 | 6,7 | 96 | 0,3 | 319,2 | 4664 |
| M19 | 15,1 | 6,7 | 96 | 0,3 | 168,0 | 2407 |
| M20 | 15,1 | 35,3 | 80 | 0,3 | 200,3 | 467 |

(fortgesetzt)

| Beispiel | Viskosität* SK.ME ohne (a2.x) | Viskosität* SK.ME | Viskositätsverlust in % | Viskosität* SK.MF | Viskosität* SK.ME + SK.MF | Viskositätssteigerung[3] in % |
|---|---|---|---|---|---|---|
| M21 | 15,1 | 35,3 | 80 | 0,3 | 754,3 | 2037 |
| M22 | 15,1 | 35,3 | 80 | 0,01 | 419,9 | 1090 |
| M23 | 15,1 | 4,3 | 98 | 0,3 | 5,1 | 19 |
| M24 | 15,1 | 4,3 | 98 | 0,3 | 21,4 | 398 |
| M25 | 15,1 | 4,3 | 98 | 0,01 | 113,5 | 2540 |
| Beispiel | Viskosität* SK.MG ohne (a2.x) | Viskosität* SK.MG | Viskositätsverlust in % | Viskosität* SK.MH | Viskosität* SK.MG + SK.MH | Viskositätssteigerung[4] in % |
| M26 | 30,8 | 16,7 | 46 | 0,3 | 163,4 | 878 |
| M27 | 30,8 | 16,7 | 46 | 0,3 | 68,4 | 310 |
| M28 | 30,8 | 16,7 | 46 | 0,3 | 516,6 | 2993 |
| M29 | 30,8 | 1,0 | 97 | 0,3 | 179,3 | 17830 |
| M30 | 30,8 | 1,0 | 97 | 0,3 | 18,5 | 1750 |
| M31 | 30,8 | 1,0 | 97 | 0,3 | 301,8 | 30080 |
| M32 | 30,8 | 8,1 | 74 | 0,3 | 942,1 | 11531 |
| M33 | 30,8 | 8,1 | 74 | 0,3 | 603,3 | 7348 |
| M34 | 30,8 | 8,1 | 74 | 0,3 | 1037,0 | 12702 |
| Beispiel | Viskosität* SK.MI ohne (a2.x) | Viskosität* SK.MI | Viskositätsverlust in % | Viskosität* SK.MJ | Viskosität* SK.MI + SK.MJ | Viskositätssteigerung[5] in % |
| M35 | 442 | 22,1 | 95 | 1,8 | 34,4 | 56 |
| M36 | 442 | 22,1 | 95 | 1,8 | 217,7 | 885 |
| * in Pascalsekunden; [1]gegenüber SK.MA; [2] gegenüber SK.MC; [3] gegenüber SK.ME; [4] gegenüber SK.MG ; [5] gegenüber SK.MI | | | | | | |

Besonders aussagekräftig sind die Beispiele der drei Reihen M26 bis M28, M29 bis M31 und M32 bis M34 für UP-Systeme, da diese mit unterschiedlichen Styren enhaltenden (a1.5)/(a2.x)-Kombinationen (1. Modul) und den Komponenten (b1.3), (b1.7) bzw. (b1.10) (2. Modul) durchgeführt wurden. In jeder der drei Versuchsreihen zeigte die Komponente (b1.10) die beste viskositätssteigernde Wirkung und die Komponente (b1.7) die schlechteste. Diglykolamin (= b1.10) besitzt dabei den höchsten Anteil an verdickeroberflächenaffinen Strukturelementen, inklusive einer Amino- und einer Hydroxylgruppe, während TWEEN 20 (= b1.7) ausschließlich Hydroxylgruppen als verdickeroberflächenaffine Strukturelemente in deutlich geringerem Anteil besitzt.

Die stärksten Effekte sind erfindungsgemäß bei den Beispielen M29 bis M31 zu verzeichnen, die vom Netz- und Dispergiermittel (a2.3) mit dem geringsten Anteil an verdickeroberflächenaffinen Strukturelementen unter den verglichenen Dispergiermitteln (a2.12), (a2.3) und (a2.9) in den styrenbasierten Systemen ausgestattet ist.

## Patentansprüche

**1.** Zwei- oder mehrkomponentiges System, umfassend
mindestens eine Polyester-Komponente 1, die

     i. mindestens einen ungesättigten Polyester,
     ii. mindestens ein ethylenisch ungesättigtes Monomer,
     iii. mindestens einen anorganischen Verdicker (a1) und
     iv. mindestens ein Netz- und Dispergiermittel (a2) umfasst, welches die Verdickungswirkung des anorganischen Verdickers (a1) inhibiert; und

mindestens eine Initiator-Komponente 2, die

     i. mindestens eine Komponente (b1) umfasst, welche die Inhibition der Verdickungswirkung des anorganischen Verdickers (a1) zumindest teilweise aufzuheben vermag, und
     ii. mindestens einen Initiator, der die Polymerisation der Komponenten i. und ii. der Polyester-Komponente 1 auszulösen vermag; und wobei

das Netz- und Dispergiermittel (a2) gegenüber den Komponenten i. und ii. der Polyester-Komponente 1 nicht reaktiv ist.

**2.** Zwei- oder mehrkomponentiges System gemäß Anspruch 1, wobei der anorganische Verdicker (a1) gewählt ist aus der Gruppe bestehend aus Schichtsilikaten, gefällten Kieselsäuren und pyrogenen Kieselsäuren.

**3.** Zwei- oder mehrkomponentiges System gemäß einem der Ansprüche 1 oder 2, wobei der anorganische Verdicker (a1) nicht-organisch modifizierte pyrogene Kieselsäure oder hydrophob modifizierte pyrogene Kieselsäure ist.

**4.** Zwei- oder mehrkomponentiges System gemäß einem der Ansprüche 1 oder 2, wobei der anorganische Verdicker (a1) eine Schichtsilikatmischung ist, die mit quartären Alkylammoniumsalzen oberflächenbehandelt wurde und die zu 50 bis 95 Gew.-% bezogen auf die Schichtsilikatmischung, ein Tonmineral gewählt aus der Gruppe bestehend aus Sepiolith und Palykorskit oder deren Mischungen umfasst und zu weniger als 50 Gew.-%, bezogen auf die Schichtsilikatmischung mindestens eines Smektits enthält.

**5.** Zwei- oder mehrkomponentiges System gemäß einem oder mehreren der Ansprüche 1 bis 4, wobei der ungesättigte Polyester der Polyester-Komponente 1 durch Reaktion zwischen

     mindestens einer ungesättigten Dicarbonsäure gewählt aus der Gruppe umfassend Maleinsäure, Fumarsäure, Mesaconsäure,
     Citraconsäure und Itaconsäure und deren Anhydriden, sowie gegebenenfalls unter Verwendung mindestens einer weiteren Dicarbonsäure gewählt aus aliphatischen, cycloaliphatischen und aromatischen Dicarbonsäuren; und
     mindestens einem Diol gewählt aus der Gruppe umfassend 1,2-Propandiol, 1,3-Propandiol, Ethylenglykol, Diethylenglykol,
     Dipropylenglykol, Triethylenglykol, Neopentylglykol, 2-Methyl-2-ethyl-propandiol-1,3, hydriertem Bisphenol A und oxalkylierten Bisphenolen, sowie gegebenenfalls

einem Alkohol gewählt aus der Gruppe umfassend Mono- und Diallylether von Glycerin, Mono- und Diallylether von Trimethylolpropan, und Di- und Triallylether des Pentaerythrits, erhältlich ist.

6. Zwei- oder mehrkomponentiges System gemäß einem oder mehreren der Ansprüche 1 bis 5, wobei als ethylenisch ungesättigtes Monomer in der Polyester-Komponente 1 mindestens eines gewählt aus der Gruppe bestehend aus Styren, alpha-Methylstyren, Methylacrylat, Methylmethacrylat, Vinylacetat, Divinylbenzol, Diallylphthalat, Triallylcyanurat und Triallylphosphat enthalten ist.

7. Zwei- oder mehrkomponentiges System gemäß einem oder mehreren der Ansprüche 1 bis 6, wobei die Polyester-Komponente 1 des Weiteren

   v. mindestens einen Beschleuniger gewählt aus der Gruppe der Schwermetallsalze oder tertiären aromatischen Amine

enthält.

8. Zwei- oder mehrkomponentiges System gemäß einem oder mehreren der Ansprüche 1 bis 7, wobei die Initiator-Komponente 2 als Initiator einen Initiator gewählt aus der Gruppe bestehend aus Hydroperoxiden, Peroxiden und Photoinitiatoren enthält, und im Falle der Hydroperoxide und Peroxide ein Beschleuniger wie in Anspruch 6 definiert in der Polyester-Komponente 1 enthalten ist.

9. Zwei- oder mehrkomponentiges System gemäß einem oder mehreren der Ansprüche 1 bis 8, wobei die Netz- und Dispergiermittel (a2) und die Komponente (b1) so gewählt werden, dass sie eine oder mehrere der folgenden funktionellen Gruppen gewählt aus
Gruppe 1: bestehend aus

   - Imidazolylgruppen, mit dem Strukturelement N-C=N,
   - Aminogruppen mit den Strukturelementen N für tertiäre Amine, NH für sekundäre Amine und $NH_2$ für primäre Amine und
   - Ammoniumgruppen mit dem Strukturelement $NH^+X^-$ für Ammoniumsalze aus tertiären Aminen, mit dem Strukturelement $NH_2^+X^-$ für Ammoniumsalze aus sekundären Aminen und $NH_3^+X^-$ für Ammoniumsalze aus primären Aminen, worin jeweils $X^-$ für das Anion einer Säure steht;

   und/oder
Gruppe 2: bestehend aus

   - Hydroxylgruppen mit dem Strukturelement OH,
   - Harnstoffgruppen mit dem Strukturelement HNC(O)CNH für Harnstoffe aus primären Aminen und NC(O)CN für Harnstoffe aus sekundären Aminen,
   - Amidgruppen, mit dem Strukturelement C(O)N für Amide aus sekundären Aminen, C(O)NH für Amide aus primären Aminen und $C(O)NH_2$ für Amide aus Ammoniak,
   - Carbonsäuregruppen mit dem Strukturelement COOH und
   - organischen Phosphorsäureestergruppen mit dem Strukturelement $OP(O)(OH)_2$

enthalten, und
wobei

   (A) der gewichtsprozentuale Anteil an Strukturelementen im Netz- und Dispergiermittel (a2), gewählt aus den funktionellen Gruppen der Gruppen 1 und 2, bezogen auf das Gewicht des Netz- und Dispergiermittels (a2) niedriger ist als der gewichtsprozentuale Anteil an Strukturelementen in Komponente (b1), gewählt aus den funktionellen Gruppen der Gruppen 1 und 2, bezogen auf das Gewicht der Komponente (b1);
   und/oder
   (B) Komponente (b1) einen gewichtsprozentual höheren Anteil an Strukturelementen aus den funktionellen Gruppen gewählt aus Gruppe 1, bezogen auf das Gewicht der Komponente (b1) enthält, als das Netz- und Dispergiermittel (a2) an Strukturelementen aus den funktionellen Gruppen gewählt aus Gruppe 1, bezogen auf das Gewicht des Netz- und Dispergiermittels (a2).

10. Zwei- oder mehrkomponentiges System gemäß Anspruch 9, wobei

(A) der gewichtsprozentuale Anteil an Strukturelementen, gewählt aus den funktionellen Gruppen der Gruppen 1 und 2, bezogen auf das Gewicht des Netz- und Dispergiermittels (a2) kleiner 11 Gew.-% beträgt, und der gewichtsprozentuale Anteil an Strukturelementen, gewählt aus den funktionellen Gruppen der Gruppen 1 und 2, bezogen auf das Gewicht der Komponente (b1) größer oder gleich 11 Gew.-% beträgt.

11. Zwei- oder mehrkomponentiges System gemäß einem der Ansprüche 9 oder 10, wobei die Differenz der gewichtsprozentualen Anteile an Strukturelementen zwischen dem Netz- und Dispergiermittel (a2) und Komponente (b1) mindestens 2 Gew.-% beträgt.

12. Zwei- oder mehrkomponentiges System gemäß einem der Ansprüche 1 bis 11, wobei das Gewichtsverhältnis von Netz- und Dispergiermittel (a2) zur Komponente (b1) 15:1 bis 1:5 beträgt.

13. Zwei- oder mehrkomponentiges System gemäß einem der Ansprüche 1 bis 12, wobei das Netz- und Dispergiermittel (a2) reversibel an die Oberfläche des anorganischen Verdickers (a1) bindet.

14. Zwei- oder mehrkomponentiges System gemäß einem der Ansprüche 1 bis 13, wobei das Polymer (b1) unter zumindest teilweiser Verdrängung von (a2) an die Oberfläche des anorganischen Verdickers (a1) binden kann.

15. Zwei- oder mehrkomponentiges System gemäß einem oder mehreren der Ansprüche 1 bis 14, wobei es sich um einen Klebstoff, Dichtstoff, ein Beschichtungsmittel oder eine Formmasse handelt.

16. Substrat, beschichtet mit einem zwei- oder mehrkomponentigen System eines der Ansprüche 1 bis 15.

17. Verwendung mindestens eines anorganischen Verdickers (a1) und mindestens eines Netz- und Dispergiermittels (a2), welches die Verdickungswirkung des anorganischen Verdickers (a1) inhibiert, in einer mindestens einen ungesättigten Polyester enthaltenden Formulierung, zur Ausrüstung der Formulierung mit einem latenten Verdickungseffekt.

## Claims

1. Two- or multicomponent system comprising
at least one polyester component 1 which comprises

   i. at least one unsaturated polyester,
   ii. at least one ethylenically unsaturated monomer,
   iii. at least one inorganic thickener (a1), and
   iv. at least one wetting and dispersing agent (a2) which inhibits the thickening effect of the inorganic thickener (a1);

   and
   at least one initiator component 2 which comprises

   i. at least one component (b1) which is able at least partly to eliminate the inhibition of the thickening effect of the inorganic thickener (a1), and
   ii. at least one initiator which is able to trigger the polymerization of components i. and ii. of the polyester component 1; and

   the wetting and dispersing agent (a2) being nonreactive toward components i. and ii. of the polyester component 1.

2. Two- or multicomponent system as claimed in claim 1, the inorganic thickener (a1) being selected from the group consisting of phyllosilicates, precipitated silicas, and fumed silicas.

3. Two- or multicomponent system as claimed in either of claims 1 and 2, the inorganic thickener (a1) being non-organically modified fumed silica or hydrophobically modified fumed silica.

4. Two- or multicomponent system as claimed in either of claims 1 and 2, the inorganic thickener (a1) being a phyllosilicate mixture which has been surface-treated with quaternary alkylammonium salts and which comprises 50 to 95 wt%, based on the phyllosilicate mixture, of a clay mineral selected from the group consisting of sepiolite and palygorskite or mixtures thereof and less than 50 wt%, based on the phyllosilicate mixture, of at least one smectite.

5. Two- or multicomponent system as claimed in one or more of claims 1 to 4, the unsaturated polyester of the polyester component 1 being obtainable by reaction between

at least one unsaturated dicarboxylic acid selected from the group encompassing maleic acid, fumaric acid, mesaconic acid, citraconic acid, and itaconic acid and their anhydrides, and also

optionally using at least one further dicarboxylic acid selected from aliphatic, cycloaliphatic, and aromatic dicarboxylic acids;

and

at least one diol selected from the group encompassing 1,2-propanediol, 1,3-propanediol, ethylene glycol, diethylene glycol, dipropylene glycol, triethylene glycol, neopentyl glycol, 2-methyl-2-ethylpropane-1,3-diol, hydrogenated bisphenol A, and oxalkylated bisphenols, and also, optionally,

an alcohol selected from the group encompassing monoallyl and diallyl ethers of glycerol, monoallyl and diallyl ethers of trimethylolpropane, and diallyl and triallyl ethers of pentaerythritol.

6. Two- or multicomponent system as claimed in one or more of claims 1 to 5, the polyester component 1 comprising as ethylenically unsaturated monomer at least one selected from the group consisting of styrene, alpha-methylstyrene, methyl acrylate, methyl methacrylate, vinyl acetate, divinylbenzene, diallyl phthalate, triallyl cyanurate, and triallyl phosphate.

7. Two- or multicomponent system as claimed in one or more of claims 1 to 6, the polyester component 1 further comprising

v. at least one accelerator selected from the group of heavy metal salts or tertiary aromatic amines.

8. Two- or multicomponent system as claimed in one or more of claims 1 to 7, the initiator component 2 comprising as initiator an initiator selected from the group consisting of hydroperoxides, peroxides, and photoinitiators, and, in the case of the hydroperoxides and peroxides, there being an accelerator as defined in claim 6 in the polyester component 1.

9. Two- or multicomponent system as claimed in one or more of claims 1 to 8, the wetting and dispersing agent (a2) and the component (b1) being selected such that they comprise one or more of the following functional groups selected from

group 1: consisting of

- imidazolyl groups, with the structural element N-C=N,
- amino groups with the structural elements N for tertiary amines, NH for secondary amines, and $NH_2$ for primary amines, and
- ammonium groups with the structural element $NH^+X^-$ for ammonium salts of tertiary amines, with the structural element $NH_2^+X^-$ for ammonium salts of secondary amines, and $NH_3^+X^-$ for ammonium salts of primary amines, $X^-$ in each case being the anion of an acid;

and/or

group 2: consisting of

- hydroxyl groups with the structural element OH,
- urea groups with the structural element HNC(O)CNH for ureas of primary amines and NC(O)CN for ureas of secondary amines,
- amide groups, with the structural element C(O)N for amides of secondary amines, C(O)NH for amides of primary amines, and $C(O)NH_2$ for amides of ammonia,
- carboxylic acid groups with the structural element COOH, and
- organic phosphoric ester groups with the structural element $OP(O)(OH)_2$,

and

(A) the weight percentage fraction of structural elements in the wetting and dispersing agent (a2), selected from the functional groups of groups 1 and 2, based on the weight of the wetting and dispersing agent (a2), being lower than the weight percentage fraction of structural elements in component (b1), selected from the functional groups of groups 1 and 2, based on the weight of the component (b1);

and/or

(B) component (b1) comprising a higher weight percentage fraction of structural elements from the functional groups selected from group 1, based on the weight of component (b1), than that of the structural elements from the functional groups selected from group 1 in the wetting and dispersing agent (a2), based on the weight of the wetting and dispersing agent (a2).

10. Two- or multicomponent system as claimed in claim 9,

(A) the weight percentage fraction of structural elements selected from the functional groups of groups 1 and 2, based on the weight of the wetting and dispersing agent (a2), being less than 11 wt%, and

the weight percentage fraction of structural elements selected from the functional groups of groups 1 and 2, based on the weight of component (b1), being greater than or equal to 11 wt%.

11. Two- or multicomponent system as claimed in either of claims 9 and 10, the difference in the weight percentage fractions of structural elements between the wetting and dispersing agent (a2) and component (b1) being at least 2 wt%.

12. Two- or multicomponent system as claimed in any of claims 1 to 11, the weight ratio of wetting and dispersing agent (a2) to component (b1) being 15:1 to 1:5.

13. Two- or multicomponent system as claimed in any of claims 1 to 12, the wetting and dispersing agent (a2) binding reversibly to the surface of the inorganic thickener (a1).

14. Two- or multicomponent system as claimed in any of claims 1 to 13, the polymer (b1) being able to bind to the surface of the inorganic thickener (a1) with at least partial displacement of (a2).

15. Two- or multicomponent system as claimed in one or more of claims 1 to 14, being an adhesive, sealant, a coating material or a molding compound.

16. Substrate coated with a two- or multicomponent system of any of claims 1 to 15.

17. Use of at least one inorganic thickener (a1) and at least one wetting and dispersing agent (a2) which inhibits the thickening effect of the inorganic thickener (a1) in a formulation comprising at least one unsaturated polyester, for equipping the formulation with a latent thickening effect.

**Revendications**

1. Système à deux ou plusieurs composants, comportant au moins un composant polyester 1 qui comprend

i. au moins un polyester non saturé,
ii. au moins un monomère éthyléniquement non saturé,
iii. au moins un agent épaississant inorganique (a1) et
iv. au moins un agent mouillant ou de dispersion (a2) qui inhibe l'action épaississant de l'agent épaississant inorganique (a1) ;

et au moins un composant initiateur 2, qui

i. comprend au moins un composant (b1) qui peut supprimer d'au moins partiellement l'inhibition de l'action épaississant de l'agent épaississant inorganique (a1), et
ii. au moins un initiateur qui peut initier la polymérisation du composant i. et ii. du composant polyester 1 ; et

l'agent mouillant ou de dispersion (a2) étant non-réactif aux composants i. et ii. du composant polyester 1.

**2.** Système à deux ou plusieurs composants selon la revendication 1, dans lequel l'agent épaississant inorganique (a1) est choisi dans le groupe consistant en les phyllosilicates, les acides siliciques précipités et les acides siliciques pyrogénés.

**3.** Système à deux ou plusieurs composants selon l'une quelconque des revendications 1 ou 2, dans lequel l'agent épaississant inorganique (a1) est l'acide silicique pyrogéné et modifié par composés non-organiques ou l'acide silicique pyrogéné et modifié de manière hydrophobe.

**4.** Système à deux ou plusieurs composants selon l'une quelconque des revendications 1 ou 2, dans lequel l'agent épaississant inorganique (a1) est un mélange des phyllosilicates qui est traité en surface avec des sels d'alkylammonium quaternaires, et contient de 50 à 95 % en poids, par rapport au mélange des phyllosilicates, d'un minéral argileux choisi dans le groupe consistant en la sépiolite et la palygorskite ou les mélanges de celles-ci, et contient moins de 50 % en poids, par rapport au mélange des phyllosilicates, d'au moins une smectite.

**5.** Système à deux ou plusieurs composants selon l'une quelconque ou plusieurs des revendications 1 à 4, dans lequel le polyester non saturé du composant polyester 1 peut être obtenu par réaction entre
au moins un acide dicarboxylique non saturé, choisi dans le groupe comportant l'acide maléique, l'acide fumarique, l'acide mésaconique, l'acide citraconique et l'acide itaconique et leurs anhydrides, et
le cas échéant en utilisant au moins un autre acide dicarboxylique choisi parmi les acides dicarboxyliques aliphatiques, cycloaliphatiques et aromatiques ;
et
au moins un diol choisi dans le groupe comportant 1,2-propanediol, 1,3-propanediol, éthylène glycol, diéthylène glycol, dipropylène glycol, triéthylène glycol, néopentyle glycol, 2-méthyle-2-éthyle-propanediol-1,3, bisphénol A hydrogéné et bisphénols oxalkylés, et le cas échéant
un alcool choisi dans le groupe comportant les mono- et diallyléthers de la glycérine, les mono- et diallyléthers de triméthylolpropane, et les di- et triallyléthers du pentaérythritol.

**6.** Système à deux ou plusieurs composants selon l'une quelconque ou plusieurs des revendications 1 à 5, dans lequel au moins un monomère choisi dans le groupe consistant en styrène, alpha-méthyle-styrène, acrylate de méthyle, méthacrylate de méthyle, acétate de vinyle, divinylbenzène, diallylphthalate, triallylcyanurate et triallylphosphate est contenu comme monomère éthyléniquement non saturé dans le composant polyester 1.

**7.** Système à deux ou plusieurs composants selon l'une quelconque ou plusieurs des revendications 1 à 6, dans lequel le composant polyester 1 en outre contient

v. au moins un accélérateur choisi dans le groupe des sels de métaux lourds ou des amines tertiaires aromatiques.

**8.** Système à deux ou plusieurs composants selon l'une quelconque ou plusieurs des revendications 1 à 7, dans lequel le composant initiateur 2 contient, comme initiateur, un initiateur choisi dans le groupe consistant en les hydroperoxydes, les peroxydes et les photoinitiateurs, et dans le cas des hydroperoxydes et peroxydes, un accélérateur comme défini dans la revendication 6 est contenu dans le composant polyester 1.

**9.** Système à deux ou plusieurs composants selon l'une quelconque ou plusieurs des revendications 1 à 8, dans lequel l'agent mouillant ou de dispersion (a2) et le composant (b1) sont choisis de telle manière qu'ils contiennent un ou plusieurs des groupes fonctionnels choisis dans
le groupe 1, consistant en :

- les groupes imidazolyle avec l'élément de structure N-C=N,
- les groupes amine avec les éléments de structure N pour les amines tertiaires, NH pour les amines secondaires et $NH_2$ pour les amines primaires, et
- les groupes ammonium avec l'élément de structure $NH^+X^-$ pour les sels d'ammonium des amines tertiaires, avec l'élément de structure $NH_2^+X^-$ pour les sels d'ammonium des amines secondaires et $NH_3^+X^-$ pour les sels d'ammonium des amines primaires, $X^-$ respectivement représentant l'anion d'un acide ;

et/ou
groupe 2, consistant en :

- les groupes hydroxyle avec l'élément de structure OH,

- les groupes urée avec l'élément de structure HNC(O)CNH pour les urées des amines primaires et NC(O)CN pour les urées des amines secondaires,

- les groupes amide, avec l'élément de structure C(O)N pour les amides des amines secondaires, C(O)NH pour les amides des amines primaires et $C(O)NH_2$ pour les amides de l'ammoniaque, - les groupes acide carboxylique avec l'élément de structure COOH et

- les groupes ester de l'acide phosphorique organique avec l'élément de structure $OP(O)(OH)_2$, et où

(A) le pourcentage en poids des éléments de structure dans l'agent mouillant ou de dispersion (a2), choisi dans les groupes fonctionnels des groupes 1 et 2, par rapport au poids de l'agent mouillant ou de dispersion (a2) est inférieur au pourcentage en poids des éléments de structure dans le composant (b1), choisi dans les groupes fonctionnels des groupes 1 et 2, par rapport au poids du composant (b1) ;

et/ou

(B) le composant (b1) contient une proportion plus importante, en percent en poids, des éléments de structure des groupes fonctionnels choisis dans le groupe 1, par rapport au poids des composant (b1), que la proportion des éléments de structure des groupes fonctionnels choisis dans le groupe 1, par rapport au poids de l'agent mouillant ou de dispersion (a2), dans l'agent mouillant ou de dispersion (a2).

10. Système à deux ou plusieurs composants selon la revendication 9, dans lequel (A) le pourcentage en poids des éléments de structure, choisi dans les groupes fonctionnels des groupes 1 et 2, par rapport au poids de l'agent mouillant ou de dispersion (a2) est inférieur de 11 % en poids, et le pourcentage en poids des éléments de structure, choisi dans les groupes fonctionnels des groupes 1 et 2, par rapport au poids du composant (b1) est 11 % en poids ou supérieur.

11. Système à deux ou plusieurs composants selon l'une quelconque des revendications 9 ou 10, dans lequel la différence des pourcentages en poids des éléments de structure de l'agent mouillant ou de dispersion (a2) et le composant (b1) est au moins 2 % en poids.

12. Système à deux ou plusieurs composants selon l'une quelconque des revendications 1 à 11, dans lequel la proportion pondérale de l'agent mouillant ou de dispersion (a2) et le composant (b1) est de 15 : 1 à 1 : 5.

13. Système à deux ou plusieurs composants selon l'une quelconque des revendications 1 à 12, dans lequel l'agent mouillant ou de dispersion (a2) se lie à la surface de l'agent épaississant inorganique (a1) de manière réversible.

14. Système à deux ou plusieurs composants selon l'une quelconque des revendications 1 à 13, dans lequel le polymère (b1) peut se lier à la surface de l'agent épaississant inorganique (a1) en substituant (a2) d'au moins partiellement.

15. Système à deux ou plusieurs composants selon l'une quelconque ou plusieurs des revendications 1 à 14, le système étant un agent adhésif, un mastic, un agent de revêtement ou un matériau de moulage.

16. Substrat revêtu avec un système à deux ou plusieurs composants selon l'une quelconque des revendications 1 à 15.

17. Utilisation d'au moins un agent épaississant inorganique (a1) et au moins un agent mouillant ou de dispersion (a2) qui inhibe l'action épaississant de l'agent épaississant inorganique (a1), dans une formulation contenant au moins un polyester non saturé pour conférer à la formulation une tendance latente à l'épaississement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 281124 A2
- EP 0422455 A
- CA 837699
- GB 1446007 A
- EP 0835910 A1
- WO 2010147690 A2
- EP 2447293 B1
- EP 2411441 B1
- EP 0154678 B1
- EP 0270126 B1
- EP 0318999 B1
- EP 0417490 B1
- EP 0879860 B1
- EP 0893155 B1
- EP 1081169 B1
- EP 1416019 A1
- EP 1486524 A1
- EP 1593700 B1
- EP 1640389 A1
- EP 1650246 A1
- EP 174290 A
- EP 1803753 A
- EP 1837355 A
- EP 2668240 A
- WO 2012175159 A
- WO 2012175157 A
- DE 102006048144
- DE 102006062439
- DE 102006062440
- DE 102006062441
- DE 102007005720
- EP 0154678 A
- EP 318999 A
- EP 0438836 A
- EP 2668240 A1
- DE 3706860 A1

**In der Beschreibung aufgeführte Nicht-Patentliteratur**

- **VON EVA BITTMANN.** Viel Wind um GFK. Werkstoffe und Verfahren im Rotorblattbau. *Kunststoffe,* 2002, vol. 92 (11), 119-124
- **KITTEL.** *Lehrbuch der Lacke und Beschichtungen,* 1998, vol. 2, 473-485